# EUROPEAN PATENT SPECIFICATION

(11) **EP 4 032 732 B1**
(45) Date of publication and mention of the grant of the patent: **11.10.2023**
(21) Application number: 21213324.3
(22) Date of filing: 09.12.2021
(51) Int. Cl.: B60G 11/27, B60G 17/016, B60G 17/0165, B60G 17/015, B60G 21/067, B60G 21/073, B60G 17/052

(54) **AIR SPRING SYSTEM, VEHICLE AND CONTROL METHOD**
LUFTFEDERSYSTEM, FAHRZEUG UND STEUERUNGSVERFAHREN
SYSTÈME DE RESSORT PNEUMATIQUE, VÉHICULE ET PROCÉDÉ DE COMMANDE

(30) Priority: 22.01.2021 CN 202110087566
(43) Date of publication of application: 27.07.2022
(73) Proprietor: Guangzhou Chengxing Zhidong Motors Technology Co., Ltd., Guangzhou, Guangdong 510000 (CN); Guangzhou Xiaopeng Motors Technology Co., Ltd., Guangzhou, Guangdong 510000 (CN)
(72) Inventor: MENG, Lingshuai, GUANGZHOU, 510000 (CN); ZHANG, Jian, GUANGZHOU, 510000 (CN); ZHOU, Qianbo, GUANGZHOU, 510000 (CN); WANG, Jianyi, GUANGZHOU, 510000 (CN); HE, Jun, GUANGZHOU, 510000 (CN)
(74) Representative: Ran, Handong

(56) References cited:
- WO-A1-2018/141049
- US-A- 3 356 954

## Description

### FIELD

The present disclosure relates to the field of automobile technology, and in particular, relates to an air spring system, a vehicle, and a control method.

### BACKGROUND

Air springs have the advantages such as inverse S nonlinear stiffness, low vibration transmission rate, and good sound insulation performance, and thus they are widely applied in automotive suspensions. However, the existing air suspensions are mainly used to solve the problems in terms of vehicle height adjustment and vertical vibration reduction. When the vehicle is running, the air spring has a slow response to dangerous conditions such as collision, high-speed cornering or slippery road surface, and the active safety problem cannot be solved well. US 3356 954 A discloses a wheel suspension system for vehicle. WO 2018/141049 A1 provides an active suspension control system and method for individually controlling a suspension assembly of each wheel of a vehicle in response to driving conditions.

### SUMMARY

Embodiments of the present disclosure provide an air spring system, a vehicle, and a control method.

An embodiment of the present disclosure provides an air spring system for a vehicle. The air spring system includes a plurality of air springs, an air supply pipeline, a pressure accumulator, and a plurality of multi-way valves. Each of the plurality of air springs is disposed to correspond to a suspension of the vehicle, and has a first air port and a second air port. The pressure accumulator is disposed on the air supply pipeline and configured to supply air pressure to each of the plurality of air springs through the first air port and the second air port.

The plurality of multi-way valves is configured to connect the plurality of air springs with the air supply pipeline and corresponds to the plurality of air springs in one-to-one correspondence. For each of the plurality of multi-way valves, when the multi-way valve is in a first state, the first air port of one of the plurality of air springs corresponding to the multi-way valve is connected to the air supply pipeline through the multi-way valve, and the second air port of the air spring is connected to the atmosphere through the multi-way valve, and the air spring ascends under air supply of the pressure accumulator; and when the multi-way valve is in a second state, the first air port of the air spring corresponding to the multi-way valve is connected to the atmosphere through the multi-way valve, and the second air port of the air spring is connected to the air supply pipeline through the multi-way valve, and the air spring descends under air supply of the pressure accumulator.

In some embodiments, the air spring system includes a control valve configured to be connected to the pressure accumulator to control an on/off state of the pressure accumulator.

In some embodiments, the air spring system further includes an air pump connected to the air supply pipeline and configured to supply air to the plurality of air springs through the plurality of multi-way valves and to fill air into the pressure accumulator.

An embodiment of the present disclosure provides a vehicle including the air spring system as described above. The plurality of air springs includes a first air spring configured to be disposed on a left front wheel of the vehicle, a second air spring configured to be disposed on a left rear wheel of the vehicle, a third air spring configured to be disposed on a right front wheel of the vehicle, and a fourth air spring configured to be disposed on a right rear wheel of the vehicle; and the plurality of multi-way valves includes a first multi-way valve configured to connect the first air spring with the air supply pipeline, a second multi-way valve configured to connect the second air spring with the air supply pipeline, a third multi-way valve configured to connect the third air spring with the air supply pipeline, and a fourth multi-way valve configured to connect the fourth air spring with the air supply pipeline.

In some embodiments, the air spring system further includes a first connecting pipeline, a second connecting pipeline, a third connecting pipeline, a fourth connecting pipeline, a first pass valve disposed on the first connecting pipeline, a second pass valve disposed on the second connecting pipeline, a third pass valve disposed on the third connecting pipeline, and a fourth pass valve disposed on the fourth connecting pipeline; and one end of the first connecting pipeline is connected to the first air port of the first air spring, and the other end of the first connecting pipeline is connected to the second air port of the second air spring; one end of the second connecting pipeline is connected to the second air port of the second air spring, and the other end of the second connecting pipeline is connected to the first air port of the fourth air spring; one end of the third connecting pipeline is connected to the first air port of the third air spring, and the other end of the third connecting pipeline is connected to the second air port of the fourth air spring; and one end of the fourth connecting pipeline is connected to the first air port of the third air spring, and the other end of the fourth connecting pipeline is connected to the second air port of the first air spring.

In some embodiments, when a front side, a left side or a right side of the vehicle approaches a target object, among the first multi-way valve, the second multi-way valve, the third multi-way valve, and the fourth multi-way valve, two multi-way valves close to the target object are in a first state, the other two multi-way valvess are in a third state, and the first pass valve, the second pass valve, the third pass valve, and the fourth pass valve are all in a cut-off state; among the first air spring, the second air spring, the third air spring, and the fourth air spring, the first air ports and the second air ports of two air springs corresponding to the other two multi-way valves in the third state are isolated from the pressure accumulator, and states of the two air springs remain unchanged, and the other two air springs close to the target object are capable of ascending under the air supply of the pressure accumulator.

In some embodiments, when an angle of turning of the vehicle is greater than a preset angle and a vehicle speed of the vehicle is greater than a preset speed, among the first multi-way valve, the second multi-way valve, the third multi-way valve, and the fourth multi-way valve, two multi-way valves corresponding to a direction of the turning of the vehicle are in a second state, the other two multi-way valves are in the first state; the first pass valve and the third pass valve are in a cut-off state, and the second pass valve and the fourth pass valve are in a connected state; among the first air spring, the second air spring, the third air spring, and the fourth air spring, two air springs corresponding to the two multi-way valves in the second state are isolated from the pressure accumulator with the first air ports and the second air ports thereof and are capable of descending under the air supply of the pressure accumulator, and the other two air springs are capable of ascending under air supply of the pressure accumulator.

In some embodiments, when the vehicle is in a bumpy state, each of the plurality of multi-way valves is in a third state; the second pass valve and the fourth pass valve are in a cut-off state, the first pass valve and the third pass valve are in a connected state; the first air port of the first air spring is connected to the second air port of the second air spring through the first connecting pipeline, and the first air port of the third air spring is connected to the second air port of the fourth air spring through the third connecting pipeline.

In some embodiments, when a number of turnings of the vehicle within a predetermined time period is greater than a preset number, each of the plurality of multi-way valves is in a third state; the first pass valve and the third pass valve are in a cut-off state, and the second pass valve and the fourth pass valve are in a connected state; the second air port of the first air spring is connected to the second air port of the third air spring through the fourth connecting pipeline, and the second air port of the second air spring is connected to the first air port of the fourth air spring through the second connecting pipeline.

In some embodiments, when a rear side of the vehicle approaches a target object, among the first multi-way valve, the second multi-way valve, the third multi-way valve, and the fourth multi-way valve, two multi-way valves close to the target object are in a second state, the other two multi-way valves are in a third state; the first pass valve, the second pass valve, the third pass valve, and the fourth pass valve are all in a cut-off state; among the first air spring, the second air spring, the third air spring, and the fourth air spring, two air spring corresponding to the two multi-way valves in the second state are isolated from the pressure accumulator with the first air ports and the second air ports thereof and are capable of descending under the air supply of the pressure accumulator, and states of the other two air springs remain unchanged.

In some embodiments, the vehicle further includes a body. Said air spring system is disposed on the body.

An embodiment of the present disclosure provides a control method. The control method includes: controlling one of the plurality of multi-way valves to be in a first state to connect the first air port of one of the plurality of air springs corresponding to the multi-way valve to the air supply pipeline through the multi-way valve, and to connect the second air port of the air spring to the atmosphere through the multi-way valve; controlling the pressure accumulator to work to allow the air spring corresponding to the multi-way valve to ascend under air supply of the pressure accumulator when the multi-way valve is in the first state; controlling one of the plurality of multi-way valves to be in a second state to connect the first air port of one of the plurality of air springs corresponding to the multi-way valve to the atmosphere through the multi-way valve, and to connect the second air port of the air spring to the air supply pipeline through the multi-way valve; and when the multi-way valve is in the second state, controlling the pressure accumulator to work to allow the air spring corresponding to the multi-way valve to descend under the air supply of the pressure accumulator.

In some embodiments, the control method includes: when a front side, a left side or a right side of the vehicle approaches a target object, among the first multi-way valve, the second multi-way valve, the third multi-way valve, and the fourth multi-way valve, controlling two multi-way valves close to the target object to be in the first state, and controlling the other two multi-way valves to be in a third state, where among the first air spring, the second air spring, the third air spring, and the fourth air spring, the first air ports and the second air ports of two air spring corresponding to the other two multi-way valves in the third state are isolated from the pressure accumulator; controlling the first pass valve, the second pass valve, the third pass valve and the fourth pass valve to be in a cut-off state; and controlling the pressure accumulator to work to allow the other two air springs close the target object to ascend under the air supply of the pressure accumulator, and to allow states of the two air springs corresponding to the other two multi-way valves in the third state to remain unchanged.

In some embodiments, the control method further includes: when an angle of turning of the vehicle is greater than a preset angle and a vehicle speed of the vehicle is greater than a preset speed, among the first multi-way valve, the second multi-way valve, the third multi-way valve, and the fourth multi-way valve, controlling two multi-way valves corresponding to a direction of the turning of the vehicle to be in a second state, and controlling the other two multi-way valves to be in the first state, wherein the first air ports and the second air ports of two air springs corresponding to the two multi-way valves in the second state are isolated from the pressure accumulator; controlling the first pass valve and the third pass valve to be in a cut-off state, and controlling the second pass valve and the fourth pass valve to be in a connected state; and controlling the pressure accumulator to work to allow two air springs corresponding to the two multi-way valves in the second state to descend under air supply of the pressure accumulator, and to allow the other two air springs to ascend under air supply of the pressure accumulator.

In some embodiments, the control method further includes: when the vehicle is in a bumpy state, controlling each of the plurality of multi-way valves to be in a third state; and controlling the second pass valve and the fourth pass valve to be in a cut-off state, and controlling the first pass valve and the third pass valve to be in a connected state, wherein the first air port of the first air spring is connected to the second air port of the second air spring through the first connecting pipeline, and the first air port of the third air spring is connected to the second air port of the fourth air spring through the third connecting pipeline.

In some embodiments, the control method includes: when a number of turnings of the vehicle within a predetermined time period is greater than a preset number, controlling all of the plurality of multi-way valves to be in a third state; and controlling the first pass valve and the third pass valve to be in a cut-off state, and controlling the second pass valve and the fourth pass valve to be in a connected state, wherein the second air port of the first air spring is connected to the second air port of the third air spring through the fourth connecting pipeline, and the second air port of the second air spring is connected to the first air port of the fourth air spring through the second connecting pipeline.

Additional aspects and advantages of the present disclosure will be partially given in the following description, and a part thereof will become apparent from the following description, or be understood through the practice of the present disclosure.

### BRIEF DESCRIPTION OF DRAWINGS

The above-mentioned and/or additional aspects and advantages of the present disclosure will become apparent and easy to understand from the description of the embodiments in conjunction with the following drawings, in which:
FIG. 1 is a schematic structural diagram of an air spring system according to an embodiment of the present disclosure;
FIG. 2 is a schematic diagram of modules of an air spring system according to an embodiment of the present disclosure;
FIG. 3 is another schematic structural diagram of an air spring system according to the embodiment of the present disclosure;
FIG. 4 is yet another schematic structural diagram of an air spring system according to the embodiment of the present disclosure;
FIG. 5 is a schematic structural diagram of an air spring system according to an embodiment of the present disclosure;
FIG. 6 is another schematic structural diagram of an air spring system according to the embodiment of the present disclosure;
FIG. 7 is yet another schematic structural diagram of an air spring system according to the embodiment of the present disclosure;
FIG. 8 is a schematic structural diagram of an air spring system according to an embodiment of the present disclosure;
FIG. 9 is another schematic structural diagram of an air spring system according to an embodiment of the present disclosure; and
FIG. 10 is a plan view of a vehicle according to an embodiment of the present disclosure.

Reference signs of main components:
Air spring system 100, air spring 10, first air spring 11, first air port 111 of first air spring 11, second air port 112 of first air spring 11, second air spring 12, first air port 121 of second air spring 12, second air port 122 of the second air spring 12, third air spring 13, first air port 131 of third air spring 13, second air port 132 of third air spring 13, fourth air spring 14, first air port 141 of fourth air spring 14, second air port 142 of fourth air spring 14, pressure accumulator 20, air supply pipeline 21, multi-way valve 30, first multi-way valve 31, second multi-way valve 32, third multi-way valve 33, fourth multi-way valve 34, control valve 40, air pump 50, motor 60, first connecting pipeline 71, second connecting pipeline 72, third connecting pipeline 73, fourth connecting pipeline 74, first pass valve 81, second pass valve 82, third pass valve 83, fourth pass valve 84, sensor 91, controller 92, vehicle 1000, body 200

### DESCRIPTION OF EMBODIMENTS

The embodiments of the present disclosure are described in detail below. Examples of the embodiments are illustrated in the accompanying drawings, throughout which the same or similar reference numerals indicate the same or similar elements or the elements with the same or similar functions. The following embodiments described with reference to the drawings are exemplary, and are only used to explain the present disclosure, but cannot be understood as limitations of the present disclosure.

The following disclosure provides many different embodiments or examples for implementing different structures of the present disclosure. In order to simplify the disclosure of the present disclosure, components and settings of specific examples are described below. Of course, they are only examples, and are not intended to limit the present disclosure. In addition, in the present disclosure, the same reference numerals and/or reference letters may repeatedly appear in different examples, but the repetition is merely for the purpose of simplification and clarity and does not indicate the relationship between the various embodiments and/or settings involved. In addition, the present disclosure provides examples of various specific processes and materials, but those skilled in the art may conceive the disclosure of other processes and/or the use of other materials.

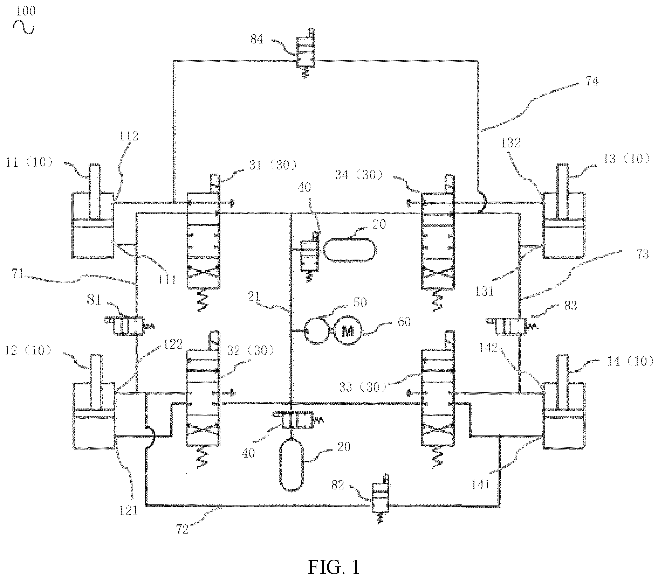

Referring to FIG. 1, an embodiment of the present disclosure provides an air spring system 100 for a vehicle 1000. The air spring system 100 includes a plurality of air springs 10, a plurality of pressure accumulators 20, and a plurality of multi-way valves 30. Each air spring 10 is disposed to correspond to one suspension of the vehicle 1000. Each air spring 10 has a first air port and a second air port. The pressure accumulator 20 is disposed on an air supply pipeline 21 of the air spring system 100 and is configured to provide air pressure to the air spring 10 through the first air port and the second air port of the air spring 10.

The multi-way valves 30 connect the air springs 10 and the air supply pipeline 21. When the multi-way valves 30 are in a first state, the first air ports of the air springs 10 are connected to the air supply pipeline 21 through the multi-way valves 30, and the second air ports of the air springs 10 are connected to the atmosphere through the multi-way valves 30, so that the air springs 10 can ascend under the air supply of the pressure accumulators 20. When the multi-way valves 30 are in the second state, the first air ports of the air springs 10 are connected to the atmosphere through the multi-way valves 30, and the second air ports of the air spring 10 are connected to the air supply pipeline 21 through the multi-way valves 30, so that the air springs 10 can descend under the air supply of the pressure accumulators 20.

In this way, during the running of the vehicle 1000, if the vehicle 1000 encounters dangerous conditions such as collision, high-speed cornering, or slippery road surface, the air springs 10 can respond quickly to solve the active safety problem.

In some embodiments, the air spring system 100 may include control valves 40. The control valve 40 is configured to connect the pressure accumulator 20 with the air supply pipeline 21. In this way, the control valve 40 can control the on/off state of the pressure accumulator 20.

In some embodiments, the air spring system 100 may include an air pump 50 and a motor 60. The motor 60 is connected to the air pump 50. The air pump 50 is connected to the air supply pipeline 21. In this way, when the motor 60 operates, the motor 60 can drive the air pump 50 to increase the air pressure, and the air pump 50 can supply air to the air spring 10 through the multi-way valve 30 and can also inflate the pressure accumulator 20.

Referring to FIG. 1 again, in some embodiments, the plurality of air springs 10 may include a first air spring 11, a second air spring 12, a third air spring 13, and a fourth air spring 14. The first air spring 11 is configured to be installed on a left front wheel of the vehicle 1000. The second air spring 12 is configured to be installed on a left rear wheel of the vehicle 1000. The third air spring 13 is configured to be installed on a right front wheel of the vehicle 1000. The fourth air spring 14 is configured to be installed on a right rear wheel of the vehicle 1000.

The multi-way valves 30 may include a first multi-way valve 31, a second multi-way valve 32, a third multi-way valve 33, and a fourth multi-way valve 34. Specifically, the first multi-way valve 31 connects the first air spring 11 with the air supply pipeline 21, the second multi-way valve 32 connects the second air spring 12 with the air supply pipeline 21, the third multi-way valve 33 connects the third air spring. 13 with the air supply pipeline 21, and the fourth multi-way valve 34 connects the fourth air spring 14 with the air supply pipeline 21.

In this way, the air pump 50 and the pressure accumulator 20 can supply air to the air springs 10 through the air supply pipeline 21 and the multi-way valves 30, so as to change the state of the air springs 10.

Referring to FIG. 1, in some embodiments, the air spring system 100 includes a first connecting pipeline 71, a second connecting pipeline 72, a third connecting pipeline 73, a fourth connecting pipeline 74, a first way wave 81, a second pass valve 82, a third pass valve 83, and a fourth pass valve 84. The first pass valve 81 is provided on the first connecting pipeline 71, the second pass valve 82 is provided on the second connecting pipeline 72, the third pass valve 83 is provided on the third connecting pipeline 73, and the fourth pass valve 84 is provided on the fourth connecting pipeline 74.

Specifically, one end of the first connecting pipeline 71 is connected to the first air port 111 of the first air spring 11, and the other end connected to the second air port 122 of the second air spring 12; one end of the second connecting pipeline 72 is connected to the second air port 122 of the second air spring 12, and the other end thereof is connected to the first air port 141 of the fourth air spring 14; one end of the third connecting pipeline 73 is connected to the first air port 131 of the third air spring 13, and the other end thereof is connected to the second air port 142 of the fourth air spring 14; and one end of the fourth connecting pipeline 74 is connected to the first air port 131 of the third air spring 13, and the other end thereof is connected to the second air port 112 of the first air spring 11.

In this way, the air pump 50 and the pressure accumulators 20 can supply air to the air springs 10 through the first connecting pipeline 71, the second connecting pipeline 72, the third connecting pipeline 73, the fourth connecting pipeline 74, the first pass valve 81, the second pass valve 82, the third pass valve 83, and the fourth pass valve 84, so as to change the state of the air springs 10.

In some embodiments, when the multi-way valves 30 are in a third state, the first air ports and the second air ports of the air springs 10 are isolated from the pressure accumulators 20. As such, the pressure accumulators 20 cannot directly supply air to the air springs 10 through the multi-way valves 30.

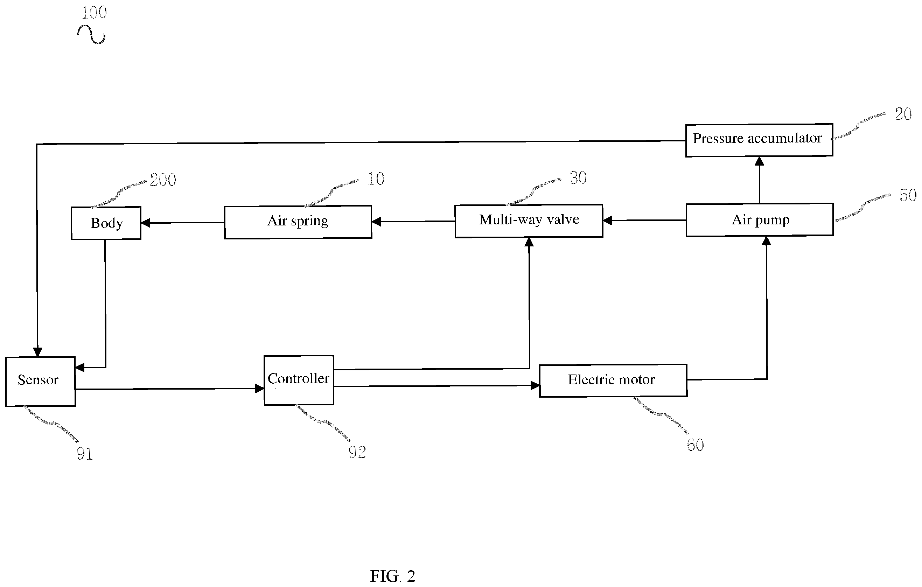

Referring to FIG. 2, in some embodiments, the air spring system 100 may include a sensor 91 and a controller 92. The sensor 91 may include an air pressure sensor 91, a vehicle speed sensor 91, a tilt sensor 91 of the body 200, and a height sensor 91 of the body 200, etc., which is not limited in the embodiments of the present disclosure. The sensor 91 can detect a current state of the vehicle 1000 and transmit the signal to the controller 92 in real time, and the controller 92 can receive the signal of the sensor 91 and control the air spring system 100.

In this way, the sensor 91 detects the current state of the vehicle 1000 and transmits the state information to the controller 92 in real time, and thus the controller 92 can adjust the state of the air spring system 100 based on the current state of the vehicle 1000, so as to adapt the vehicle 1000 to the current state.

Referring to FIG. 1, in some embodiments, when a front side of the vehicle 1000 approaches a target object, two multi-way valves 30 corresponding to the front side of the vehicle 1000 are in the first state, and the other two multi-way valves 30 are in the third state. In other words, the first multi-way valve 31 and the third multi-way valve 33 are both in the first state, and the second multi-way valve 32 and the fourth multi-way valve 34 are both in the third state. The first pass valve 81, the second pass valve 82, the third pass valve 83, and the fourth pass valve 84 are all in a cut-off state. The control valve 40 is in a connected state.

Specifically, when the sensor 91 detects that the front side of the vehicle 1000 approaches the target object, the sensor 91 transmits this information to the controller 92. At this time, the motor 60 starts to work and drives the air pump 50 to increase the air pressure. Since the control valve 40 is in the connected state, the pressure accumulator 20 and the air pump 50 supply air to the first air spring 11 through the first multi-way valve 31 and the first air port 111 of the first air spring 11, so that the first air spring 11 ascends rapidly under the air supply of the pressure accumulator 20 and the air pump 50; the pressure accumulator 20 and the air pump 50 supply air to the third air spring 13 through the third multi-way valve 33 and the first air port 131 of the third air spring 13, so that the third air spring 13 ascend rapidly under the air supply of the pressure accumulator 20 and the air pump 50. Since the second multi-way valve 32 and the fourth multi-way valve 34 are both in the third state, and the second pass valve 82 is in the cut-off state, the pressure accumulator 20 and the air pump 50 cannot supply air to the second air spring 12 and the fourth air spring 14, and thus the states of the second air spring 12 and the fourth air spring 14 remain unchanged.

In this way, when the sensor 91 detects that the front side of the vehicle 1000 approaches the target object, the rapid ascending of the first air spring 11 and the third air spring 13 can lower the risk of the driver, and the cooperation of the pressure accumulators 20 and the air pump 50 can increase the response speed and guarantee personal safety during emergency avoidance of obstacles.

In some embodiments, when a rear side of the vehicle 1000 approaches the target object, the two multi-way valves 30 corresponding to the rear side of the vehicle 1000 are in the first state, and the other two multi-way valves 30 are in the third state. In other words, the second multi-way valve 32 and the fourth multi-way valve 34 are both in the second state, and the first multi-way valve 31 and the third multi-way valve 33 are both in the third state. The first pass valve 81, the second pass valve 82, the third pass valve 83, and the fourth pass valve 84 are all in the cut-off state. The control valves 40 are in the connected state.

Specifically, when the sensor 91 detects that the rear side of the vehicle 1000 approaches the target object, the sensor 91 transmits this information to the controller 92. At this time, the motor 60 starts to work and drives the air pump 50 to increase the air pressure. Since the control valves 40 are in the connected state, the pressure accumulator 20 and the air pump 50 can supply air to the second air spring 12 through the second multi-way valve 32 and the second air port 122 of the second air spring 12, so that the second air spring 12 descends rapidly under the air supply of the pressure accumulator 20 and the air pump 50; and the pressure accumulator 20 and the air pump 50 supply air to the fourth air spring 14 through the fourth multi-way valve 34 and the second air port 142 of the fourth air spring 14, so that the fourth air spring 14 descends rapidly under the air supply of the pressure accumulators 20 and the air pump 50. Since the first multi-way valve 31 and the third multi-way valve 33 are both in the third state, and the fourth pass valve 84 is in the cut-off state, the pressure accumulator 20 and the air pumps 50 cannot supply air to the first air spring 11 and the third air spring 13, and thus the states of the first air spring 11 and the third air spring 13 remain unchanged.

In this way, when the sensor 91 detects that the rear side of the vehicle 1000 approaches the target object, the second air spring 12 and the fourth air spring 14 corresponding to the rear side of the vehicle 1000 descend rapidly, which can reduce the risk of turnover of the vehicle 1000, and can increase the response speed and improve the driving safety during emergency avoidance of obstacles through the cooperation of the pressure accumulator 20 and the air pump 50.

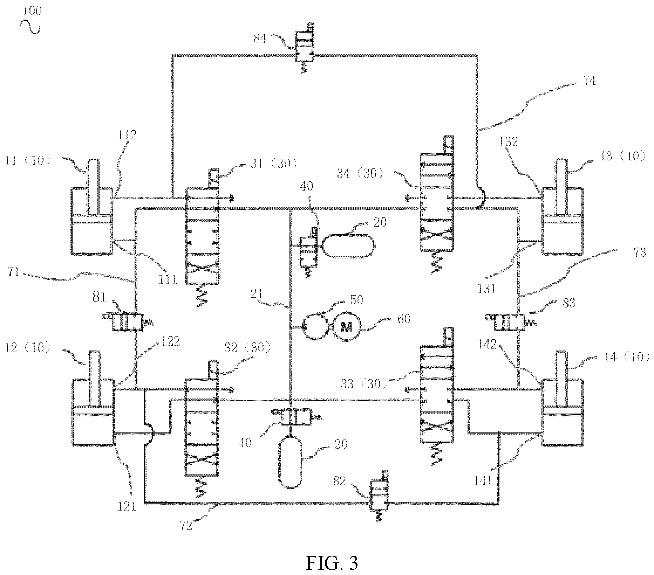

Referring to FIG. 3, in some embodiments, when a left side of the vehicle 1000 approaches the target object, the two multi-way valves 30 corresponding to the left side of the vehicle 1000 are both in the first state, and the other two multi-way valves 30 are both in the third state. In other words, the first multi-way valve 31 and the second multi-way valve 32 are both in the first state, and the third multi-way valve 33 and the fourth multi-way valve 34 are both in the third state. The first pass valve 81, the second pass valve 82, the third pass valve 83, and the fourth pass valve 84 are all in the cut-off state. The control valves 40 are in the connected state.

Specifically, when the sensor 91 detects that the left side of the vehicle 1000 approaches the target object, the sensor 91 transmits this information to the controller 92. At this time, the motor 60 starts to work and drives the air pump 50 to increase the air pressure. Since the control valves 40 are in the connected state, the pressure accumulator 20 and the air pump 50 supply air to the first air spring 11 through the first multi-way valve 31 and the first air port 111 of the first air spring 11, so that the first air spring 11 ascends rapidly under the air supply of the pressure accumulator 20 and the air pump 50; and the pressure accumulator 20 and the air pump 50 supply air to the second air spring 12 through the second multi-way valve 32 and the first air port 121 of the second air spring 12, so that the second air spring 12 ascends rapidly under the air supply of the pressure accumulators 20 and the air pump 50. Since the third multi-way valve 33 and the fourth multi-way valve 34 are both in the third state, and the second pass valve 82 and the fourth pass valve 84 are in the cut-off state, the pressure accumulators 20 and the air pump 50 cannot supply air to the third air spring 13 and the fourth air spring 14, and thus the states of the third air spring 13 and the fourth air spring 14 remain unchanged.

In this way, when the sensor 91 detects that the left side of the vehicle 1000 approaches the target object, the first air spring 11 and the second air spring 12 corresponding to the left side of the vehicle 1000 ascend rapidly, which can reduce the degree of danger for the driver, and can increase the response speed and guarantee personal safety during emergency avoidance of obstacles through the cooperation of the pressure accumulators 20 and the air pump 50.

In some embodiments, when a right side of the vehicle 1000 approaches the target object, the two multi-way valves 30 corresponding to the right side of the vehicle 1000 are both in the first state, and the other two multi-way valves 30 are both in the third state. In other words, the third multi-way valve 33 and the fourth multi-way valve 34 are both in the first state, and the first multi-way valve 31 and the second multi-way valve 32 are both in the third state. The first pass valve 81, the second pass valve 82, the third pass valve 83, and the fourth pass valve 84 are all in the cut-off state. The control valves 40 are in the connected state.

Specifically, when the sensor 91 detects that the right side of the vehicle 1000 approaches the target object, the sensor 91 transmits this information to the controller 92. At this time, the motor 60 starts to work and drives the air pump 50 to increase the air pressure. Since the control valves 40 are in the connected state, the pressure accumulator 20 and the air pump 50 supply air to the third air spring 13 through the third multi-way valve 33 and the first air port 131 of the third air spring 13, so that the third air spring 13 ascends rapidly under the air supply of the pressure accumulator 20 and the air pump 50; and the pressure accumulator 20 and the air pump 50 supply air to the fourth air spring 14 through the fourth multi-way valve 34 and the first air port 141 of the fourth air spring 14, so that the fourth air spring 14 ascends rapidly under the air supply of the pressure accumulators 20 and the air pump 50. Since the first multi-way valve 31 and the second multi-way valve 32 are both in the third state and the second pass valve 82 and the fourth pass valve 84 are both in the cut-off state, the pressure accumulators 20 and the air pump 50 cannot supply air to the first air spring 11 or the second air spring 12, and thus the states of the first air spring 11 and the second air spring 12 remain unchanged.

In this way, when the sensor 91 detects that the right side of the vehicle 1000 approaches the target object, the third air spring 13 and the fourth air spring 14 corresponding to the right side of the vehicle 1000 ascend rapidly, which reduces the degree of danger for the driver, and can increase the response speed and guarantee personal safety during emergency avoidance of obstacles through the cooperation of the pressure accumulators 20 and the air pump 50.

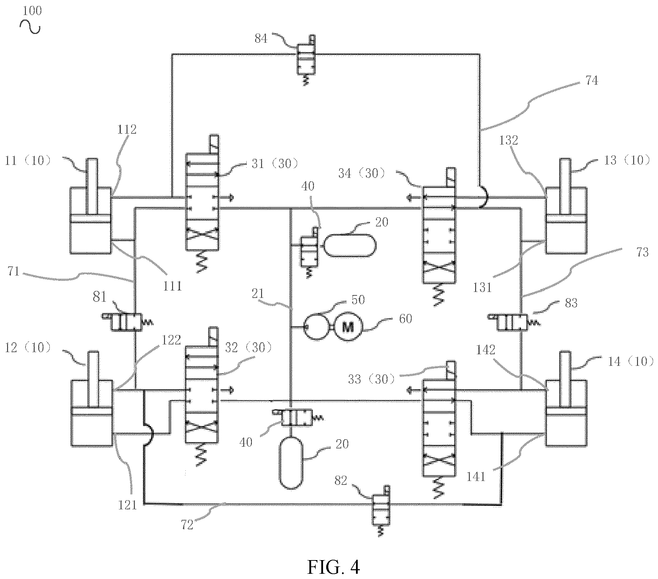

Referring to FIG. 4, when a left turning angle of the vehicle 1000 is greater than a preset angle and the vehicle speed is greater than a preset speed, the two multi-way valves 30 corresponding to a left turning direction of the vehicle 1000 are in the third state, and the other two multi-way valves 30 are in the first state. When the multi-way valves 30 are in the third state, the first air ports and the second air ports of the corresponding air springs 10 are isolated from the pressure accumulators 20, the first pass valve 81 and the third pass valves 83 are both in the cut-off state, and the second pass valve 82 and the fourth pass valve 84 are both in the connected state. The control valves 40 are in a connected state.

Specifically, when the sensor 91 detects that the left turning angle of the vehicle 1000 is greater than the preset angle and the vehicle speed is greater than the preset speed, the sensor 91 transmits the information to the controller 92. At this time, the motor 60 starts to work and drives the air pump 50 to increase the air pressure. Since the control valves 40 are in the connected state, the pressure accumulator 20 and the air pump 50 supply air to the third air spring 13 through the third multi-way valve 33 and the first air port 131 of the third air spring 13, so that the third air spring 13 ascends rapidly under the air supply of the pressure accumulator 20 and the air pump 50; and the pressure accumulator 20 and the air pump 50 supply air to the fourth air spring 14 through the fourth multi-way valve 34 and the first air port 141 of the fourth air spring 14, so that the fourth air spring 14 ascends rapidly under the air supply of the pressure accumulator 20 and the air pump 50. Since the first multi-way valve 31 is in the third state and the fourth pass valve 84 is in the connected state, the pressure accumulators 20 and the air pump 50 can supply air to the second air port 112 of the first air spring 11 through the fourth connecting pipeline 74 and the fourth pass valve 84, and thus the first air spring 11 descends under the air supply of the pressure accumulator 20 and the air pump 50. Since the second multi-way valve 32 is in the third state and the second pass valve 82 is in the connected state, the pressure accumulator 20 and the air pump 50 can supply air to the second air port 122 of the second air spring 12 through the second connecting pipeline 72 and the second pass valve 82, and thus the second air spring 12 descends under the air supply of the pressure accumulator 20 and the air pump 50.

In this way, when the sensor 91 detects that the left turning angle of the vehicle 1000 is greater than the preset angle and the vehicle speed is greater than the preset speed both the first air spring 11 and the second air spring 12 corresponding to the left turning direction of the vehicle 1000 can descend under the air supply of the pressure accumulators 20 and the air pump 50, and both the third air spring 13 and the fourth air spring 14 can ascend rapidly under the air supply of the pressure accumulators 20 and the air pump 50, thereby reducing a tilt angle of the vehicle 1000, improving the stability of the vehicle 1000 when cornering with high speed, and reducing the risk of overturn.

In some embodiments, when a right turning angle of the vehicle 1000 is greater than a preset angle and the vehicle speed is greater than a preset speed, the two multi-way valves 30 corresponding to a right turning direction of the vehicle 1000 are in the third state, and the other two multi-way valves 30 are in the first state. When the multi-way valves 30 are in the third state, the first air ports and the second air ports of the air springs 10 are isolated from the pressure accumulators 20, the first pass valve 81 and the third pass valve 83 are both in the cut-off state, and the second pass valve 82 and the fourth pass valve 84 are both in the connected state. The control valves 40 are in a connected state.

Specifically, when the sensor 91 detects that the right turning angle of the vehicle 1000 is greater than the preset angle and the vehicle speed is greater than the preset speed, the sensor 91 transmits the information to the controller 92. At this time, the motor 60 starts to work and drives the air pump 50 to increase the air pressure. Since the control valves 40 are in the connected state, the pressure accumulator 20 and the air pump 50 supply air to the first air spring 11 through the first multi-way valve 31 and the first air port 111 of the first air spring 11, so that the first air spring 11 ascends rapidly under the air supply of the pressure accumulator 20 and the air pump 50; and the pressure accumulator 20 and the air pump 50 supply air to the second air spring 12 through the second multi-way valve 32 and the first air port 121 of the second air spring 12, so that the second air spring 12 ascends rapidly under the air supply of the pressure accumulator 20 and the air pump 50. Since the third multi-way valve 33 is in the third state and the fourth pass valve 84 is in the connected state, the air in the third air spring 13 can be discharged to the outside through the fourth connecting pipeline 74, the fourth pass valve 84, and the second air port 112 of the first air spring 11, so that the first air spring 11 descends. Since the fourth multi-way valve 34 is in the third state and the second pass valve 82 is in the connected state, the air in the fourth air spring 14 can be discharged to the outside through the second connecting pipeline 72, the second pass valve 82, and the second air port 122 of the second air spring 12, so that the second air spring 12 descends.

In this way, when the sensor 91 detects that the right turning angle of the vehicle 1000 is greater than the preset angle and the vehicle speed is greater than the preset speed, both the third air spring 13 and the fourth air spring 14 corresponding to the right turning direction of the vehicle 1000 descend, and both the first the air spring 11 and the second air spring 12 can ascend rapidly under the air supply of the pressure accumulators 20 and the air pump 50, thereby reducing the tilt angle of the vehicle 1000, improving the stability of the vehicle 1000 when cornering with a high speed, and reducing the risk of overturn.

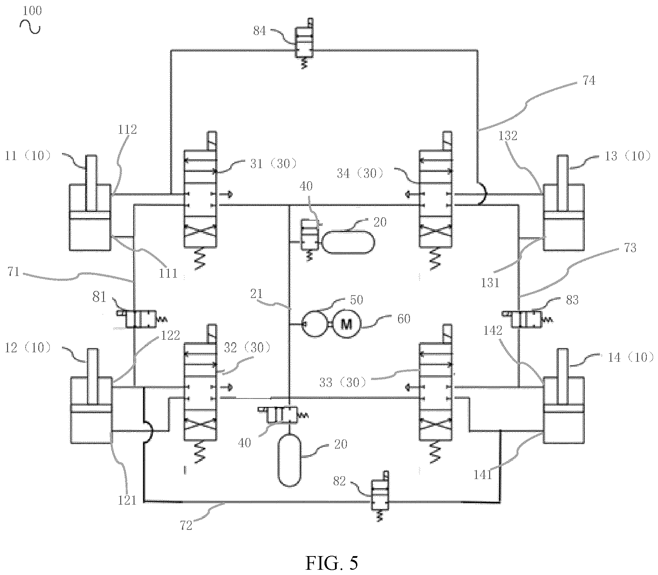

Referring to FIG. 5, in some embodiments, when the vehicle 1000 is in a bumpy state, all the multi-way valves 30 are in the third state. Both the second pass valve 82 and the fourth pass valve 84 are in the cut-off state. Both the first pass valve 81 and the third pass valve 83 are in the connected state.

Specifically, since the first pass valve 81 is in the connected state, the first air port 111 of the first air spring 11 can be connected to the second air port 122 of the second air spring 12 through the first connecting pipeline 71; and since the third pass valve 83 is in a connected state, the first air port 131 of the third air spring 13 can be connected to the second air port 142 of the fourth air spring 14 through the third connecting pipeline 73.

In this way, the front and rear suspensions can jointly absorb and consume vibration energy, thereby improving the stability and comfortableness of the vehicle 1000 under conditions where the road sections are mostly uneven.

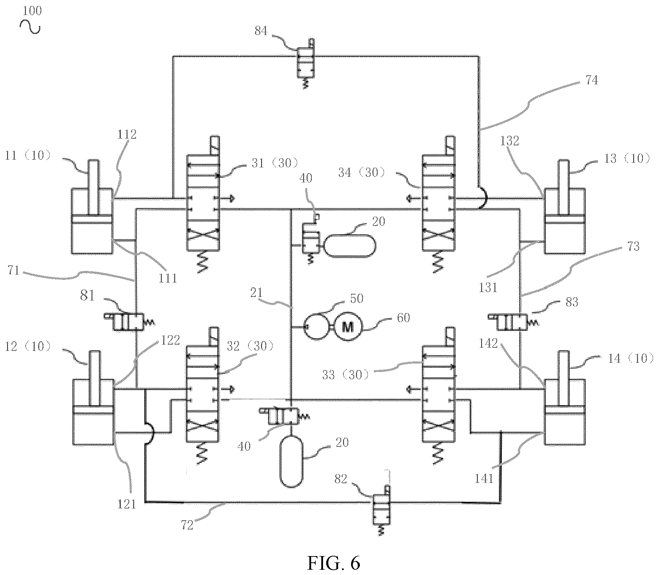

Referring to FIG. 6, in some embodiments, when the number of turnings of the vehicle 1000 within a predetermined time period is greater than a preset number, all the multi-way valves 30 are in the third state. Both the first pass valve 81 and the third pass valve 83 are in the cut-off state. Both the second pass valve 82 and the fourth pass valve 84 are in the connected state.

Specifically, since the fourth pass valve 84 is in the connected state, the second air port 112 of the first air spring 11 can be connected to the first air port 131 of the third air spring 13 through the fourth connecting pipeline 74; and since the second pass valve 82 is in the connected state, the second air port 122 of the second air spring 12 can be connected to the first air port 141 of the fourth air spring 14 through the second connecting pipeline 72.

In this way, the left and right suspensions can jointly absorb and consume vibration energy, thereby improving the stability and comfortableness of the vehicle 1000 under conditions where the road section has multiple turns.

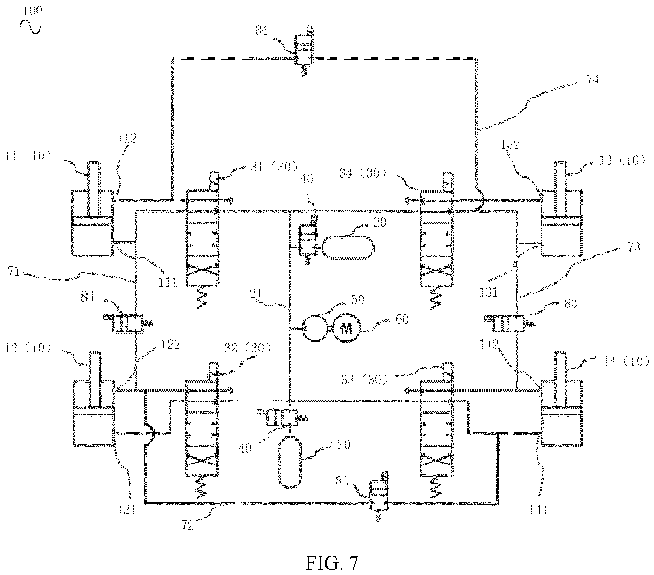

Referring to FIG. 7, in some embodiments, when a height of the vehicle 1000 is lower than a preset height, the motor 60 starts to work and drives the air pump 50 to increase the air pressure. The control valves 40, the first pass valve 81, the second pass valve 82, the third pass valve 83, and the fourth pass valve 84 are all in the cut-off state.

Specifically, the first multi-way valve 31 and the third multi-way valve 33 are both in the first state, and the second multi-way valve 32 and the fourth multi-way valve 34 are both in the third state.

The air pump 50 supplies air to the first air spring 11 through the first multi-way valve 31 and the first air port 111 of the first air spring 11, so that the first air spring 11 ascends under the air supply of the air pump 50.

The air pump 50 supplies air to the third air spring 13 through the third multi-way valve 33 and the first air port 131 of the third air spring 13, so that the third air spring 13 ascends under the air supply of the air pump 50.

Since the second multi-way valve 32 and the fourth multi-way valve 34 are both in the third state and the second pass valve 82 and the fourth pass valve 84 are both in the cut-off state, the air pump 50 cannot supply air to the second air spring 12 and the fourth air spring 14, and thus the states of the second air spring 12 and the fourth air spring 14 remain unchanged.

When the sensor 91 detects that the second air spring 12 and the fourth air spring 14 ascend to the preset height, the first multi-way valve 31 and the third multi-way valve 33 are both in the third state, and the second air spring 12 and the fourth air spring 14 are both in the first state.

Furthermore, the air pump 50 supplies air to the second air spring 12 through the second multi-way valve 32 and the first air port 121 of the second air spring 12, so that the second air spring 12 ascends under the air supply of the air pump 50.

The air pump 50 supplies air to the fourth air spring 14 through the fourth multi-way valve 34 and the first air port 141 of the fourth air spring 14, so that the fourth air spring 14 ascends under the air supply of the air pump 50.

Since the first multi-way valve 31 and the third multi-way valve 33 are both in the third state, and the second pass valve 82 and the fourth pass valve 84 are both in the cut-off state, the air pump 50 cannot supply air to the first air spring 11 and the third air spring 13, and thus the states of the first air spring 11 and the third air spring 13 remain unchanged.

When the sensor 91 detects that the second air spring 12 and the fourth air spring 14 ascend to the preset height, the active ascending state is over, and the motor 60 stops working.

In this way, through the ascending of the first air spring 11, the second air spring 12, the third air spring 13, and the fourth air spring 14 under the air supply of the air pump 50, the height of the vehicle 1000 can actively be increased, so as to improve the safety and operational stability of the vehicle 1000.

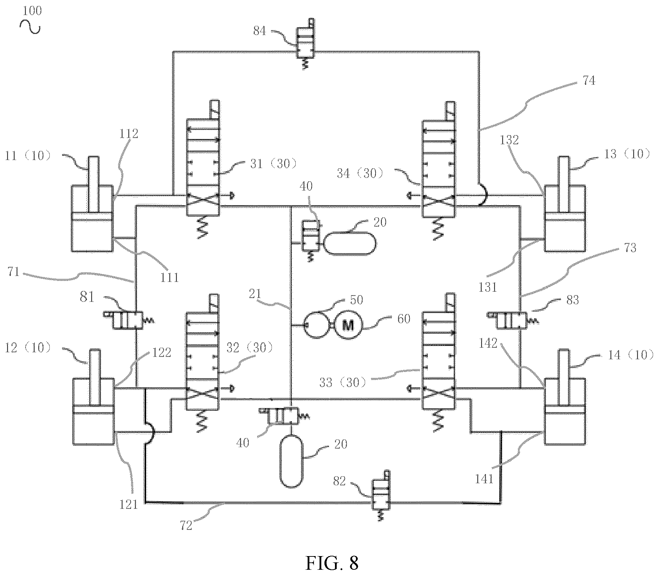

Referring to FIG. 8, in some embodiments, when the height of the vehicle 1000 is higher than the preset height, the motor 60 starts to work and drives the air pump 50 to increase the air pressure. The control valves 40, the first pass valve 81, the second pass valve 82, the third pass valve 83, and the fourth pass valve 84 are all in the cut-off state.

Specifically, the second multi-way valve 32 and the fourth multi-way valve 34 are both in the second state, and the first multi-way valve 31 and the third multi-way valve 33 are both in the third state.

The air pump 50 can supply air to the second air spring 12 through the second multi-way valve 32 and the second air port 122 of the second air spring 12, so that the second air spring 12 descends under the air supply of the air pump 50.

The air pump 50 can supply air to the fourth air spring 14 through the fourth multi-way valve 34 and the second air port 142 of the fourth air spring 14, so that the fourth air spring 14 descends under the air supply of the air pump 50.

Since the first multi-way valve 31 and the third multi-way valve 33 are both in the third state and the second pass valve 82 and the fourth pass valve 84 are both in the cut-off state, the air pump 50 cannot supply air to the first air spring 11 and the third air spring 13, and thus the states of the first air spring 11 and the third air spring 13 remain unchanged.

When the sensor 91 detects that the second air spring 12 and the fourth air spring 14 descend to the preset height, the first multi-way valve 31 and the third multi-way valve 33 are both in the second state, and the second air spring 12 and the fourth air spring 14 are both in the third state.

Furthermore, the air pump 50 can supply air to the first air spring 11 through the first multi-way valve 31 and the second air port 112 of the first air spring 11, so that the first air spring 11 descends under the air supply of the air pump 50.

The air pump 50 supplies air to the third air spring 13 through the third multi-way valve 33 and the first air port 131 of the third air spring 13, so that the third air spring 13 descends under the air supply of the air pump 50.

Since the second multi-way valve 32 and the fourth multi-way valve 34 are both in the third state, and the second pass valve 82 and the fourth pass valve 84 are both in the cut-off state, the air pump 50 cannot supply air to the second air spring 12 and the fourth air spring 14, and thus the states of the second air spring 12 and the fourth air spring 14 remain unchanged.

When the sensor 91 detects that the first air spring 11 and the third air spring 13 descend to the preset height, the active descending state is finished, and the motor 60 stops working.

In this way, through the descending of the first air spring 11, the second air spring 12, the third air spring 13, and the fourth air spring 14 under the air supply of the air pump 50, the height of the vehicle 1000 can be actively decreased, so as to improve the safety and operational stability of the vehicle 1000.

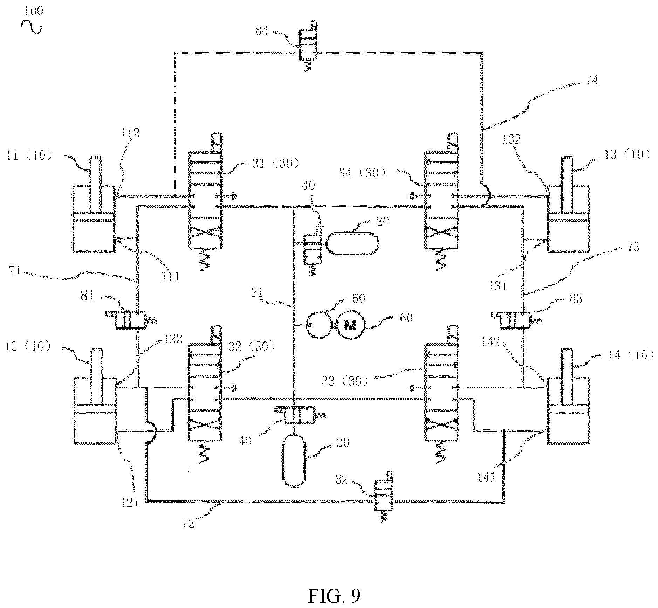

Referring to FIG. 9, in some embodiments, when the air pressure in the pressure accumulators 20 is lower than a preset air pressure, the first pass valve 81, the second pass valve 82, the third pass valve 83, and the fourth pass valve 84 are all in the cut-off state. The control valves 40 are in the connected state. The multi-way valves 30 are all in the third state. The motor 60 starts to work and drives the air pump 50 to increase the air pressure. Since the control valves 40 are in the connected state at this moment, the air pressure of the air pump 50 can pressurize the pressure accumulators 20 through the air supply pipeline 21. When the sensor 91 detects that the air pressure in the pressure accumulators 20 reaches a preset value, the motor 60 stops working.

In this way, by pressurizing the pressure accumulators 20, the pressure accumulators 20 can supply air to the air springs 10 under emergency conditions, thereby achieving the purpose of quick response.

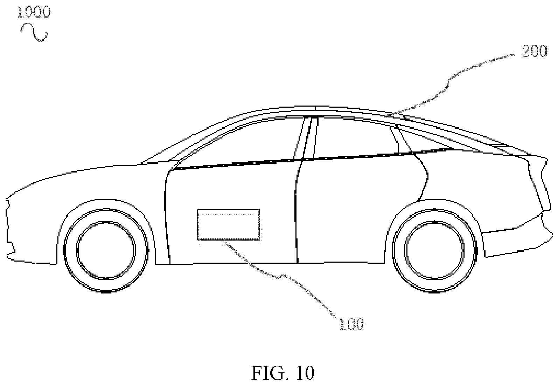

Referring to FIG. 10, an embodiment of the present disclosure provides a vehicle 1000. The vehicle 1000 includes a body 200 and an air spring system 100. The air spring system 100 is provided on the body 200. Specifically, during the running of the vehicle 1000, under the dangerous conditions such as collisions, high-speed cornering or slippery roads, the sensor 91 detects a current state of the vehicle 1000, and transmits the current state of the vehicle 1000 to the controller 92 in real time. The controller 92 can send a command to the air spring system 100 after receiving the signal of the sensor 91 to actively and quickly adjust the air springs 10, thereby improving the safety and the operational stability of the vehicle 1000, enabling adaptive adjustment under non-hazardous conditions, reducing energy consumption and improving driving experience of the driver.

An embodiment of the present disclosure provides a control method applicable to an air spring system. For example, the air spring system may be the air spring system 100 described in any one of the above-mentioned embodiments. The control method provided by the embodiment of the present disclosure includes:
S10: controlling one of the multi-way valves 30 to be in the first state so that the first air port of one of the plurality of air springs 10 corresponding to the multi-way valve 30 is connected to the air supply pipeline 21 through the multi-way valve 30, and the second air port of the air spring 10 is connected to the atmosphere through the multi-way valve 30;
S20: controlling the pressure accumulators 20 to work so that the air spring 10 ascends under the air supply of the pressure accumulators 20 when the multi-way valve 30 is in the first state;
S30: controlling one of the multi-way valve 30 to be in the second state so that the first air port of one of the plurality of air springs 10 corresponding to the multi-way valve 30 is connected to the atmosphere through the multi-way valve 30, and the second air port of the air spring 10 is connected to the air supply pipeline 21 through the multi-way valve 30; and
S40: controlling the pressure accumulators 20 to work so that the air spring 10 descend under the air supply of the pressure accumulators 20 when the multi-way valve 30 is in the second state.

In step S10, the multi-way valve 30 is controlled to be in the first state. In this case, the first air port of the air spring 10 corresponding to the multi-way valve 30 can be connected to the air supply pipeline 21 through the multi-way valve 30, and the second air port of the air spring 10 can be connected to the atmosphere through the multi-way valve 30.

Specifically, in step S20, when the multi-way valve 30 is in the first state, the pressure accumulators 20 are controlled to start working, and the air in the pressure accumulators 20 enters the air spring 10 through the air supply pipeline 21 and the first air port of the air spring 10, and therefore, the air spring 10 ascends under the air supply of the pressure accumulators 20.

In step S30, the multi-way valve 30 is controlled to be in the second state. In this case, the second air port of the air spring 10 corresponding to the multi-way valve 30 can be connected to the air supply pipeline 21 through the multi-way valve 30, and the first air port of the air spring 10 can be connected to the atmosphere through the multi-way valve 30.

Specifically, in step S40, when the multi-way valve 30 is in the second state, the pressure accumulators 20 are controlled to start working, the air in the pressure accumulators 20 enters the air spring 10 through the air supply pipeline 21 and the second air port of the air spring 10, and therefore, the air spring 10 descends under the air supply of the pressure accumulators 20.

When the multi-way valve 30 is in the first state, the first air port of the air spring 10 corresponding to the multi-way valve 30 can be connected to the air supply pipeline 21, such that the air spring 10 ascends under the action of the pressure accumulators 20. When the multi-way valve 30 is in the second state, the second air port of the air spring 10 can be connected to the air supply pipeline 21, and therefore, the air spring 10 descends under the action of the pressure accumulators 20.

In this way, by controlling the state of the multi-way valve 30, the object to which the first air port and the second air port of the air spring 10 are connected can be changed, so that the air in the pressure accumulators 20 passes through different air ports, resulting in different movements of the air spring 10.

In some embodiments, the control method includes:
S50: when a front side, a left side or a right side of the vehicle 1000 approaches a target object, controlling two multi-way valves 30 close to the target object to be in the first state, and controlling the other two multi-way valves 30 to be in the third state, where the first air ports and the second air ports of two air springs 10 corresponding to the two multi-way valves 30 in the third state are isolated from the pressure accumulators;
S60: controlling the first pass valve 81, the second pass valve 82, the third pass valve 83, and the fourth pass valve 84 to be in a cut-off state;
S70: controlling the pressure accumulators 20 to work to allow two air springs 10 close the target object ascend under the air supply of the pressure accumulators 20, and states of the two air springs 10 corresponding to the two multi-way valves 30 in the third state remain unchanged.

In this way, when it is detected that a certain side of the vehicle 1000 approaches the target object, the air springs 10 corresponding to the location of the target object will ascend rapidly, thereby reducing the risk of the driver, and through the cooperation of the pressure accumulators 20 and the air pump 50, the response speed can be increased to guarantee personal safety during emergency avoidance of obstacles.

In some embodiments, the control method includes:
S80: when an angle of turning of the vehicle 1000 is greater than a preset angle and a vehicle speed of the vehicle 1000 is greater than a preset speed, controlling two multi-way valves 30 corresponding to a direction of the turning of the vehicle 1000 to be in the second state, and controlling the other two multi-way valves 30 to be in the first state, where the first air ports and the second air ports of two air springs 10 corresponding to the two multi-way valves in the second state are isolated from the pressure accumulators 20;
S90: controlling the first pass valve 81 and the third pass valve 83 to be in a cut-off state, and controlling the second pass valve 82 and the fourth pass valve 84 to be in a connected state;
S 100: controlling the pressure accumulators 20 to work to allow the two air springs 10 corresponding to the two multi-way valves in the second state to descend under the air supply of the pressure accumulators 20, and the other two air springs 10 to ascend under the air supply of the pressure accumulators 20.

In this way, when the angle in the current turning direction of the vehicle 1000 is greater than the preset angle and the vehicle speed of the vehicle 1000 is greater than the preset angle is detected, the air springs 10 corresponding to the turning direction of the vehicle 1000 can descend under the air supply of the pressure accumulators 20, and the other air springs 10 can ascend rapidly under the air supply of the pressure accumulators 20 and the air pump 50, thereby reducing the tilt angle of the vehicle 1000, improving the stability of the vehicle 1000 when cornering with high speed, and reducing the risk of overturn.

In some embodiments, the control method includes:
S 110: when the vehicle 1000 is in a bumpy state, controlling the multi-way valves 30 to be in the third state;
S 120: controlling the second pass valve 82 and the fourth pass valve 84 to be both in a cut-off state, and controlling the first pass valve 81 and the third pass valve 83 to be both in a connected state, so that the first air port 111 of the first air spring 11 is connected to the second air port 122 of the second air spring 12 through the first connecting pipeline 71, and the first air port 131 of the third air spring 13 is connected to the second air port 142 of the fourth air spring 14 through the third connecting pipeline 73.

In this way, the first air spring 11 is connected to the second air spring 12, and the third air spring 13 is connected to the fourth air spring 14. When the road section is mostly uneven, the front and rear suspensions can jointly absorb and consume vibration energy, thereby improving the stability and comfortableness of the vehicle 1000.

In some embodiments, the control method includes:
S 130: when the number of turnings of the vehicle 1000 within a predetermined time period is greater than the predetermined number, controlling the multi-way valves 30 to be in the third state;
S140: controlling the first pass valve 81 and the third pass valve 83 to be in a cut-off state, and the second pass valve 82 and the fourth pass valve 84 to be in a connected state, so that the second air port 112 of the first air spring 11 is connected to the second air port 132 of the third air spring 13 through the fourth connecting pipeline 74, and the second air port 122 of the second air spring 12 is connected with the first air port 141 of the fourth air spring 14 through the second connecting pipeline 72.

In this way, the first air spring 11 is connected to the third air spring 13, and the second air spring 12 is connected to the fourth air spring 14. When the road section has multiple turns, the left and right suspensions can jointly absorb and consume vibration energy, thereby improving the stability and comfortableness of the vehicle 1000.

It should be noted out that, other parts of the control method of the embodiments of the present disclosure that are not described in detail can refer to the same or similar parts of the air spring system 100 of the foregoing embodiments, which will not be repeated herein.

Although the embodiments of the present disclosure have been illustrated and described above, those skilled in the art can understand that various changes, modifications, substitutions, and variations can be made to these embodiments without departing from the principle and essence of the present disclosure. The scope of the present disclosure shall be defined by the claims thereof.

## Claims

1. An air spring system (100) for a vehicle (1000), the air spring system (100) comprising:
a plurality of air springs (10), wherein each of the plurality of air springs (10) is disposed to correspond to a suspension of the vehicle (1000) and has a first air port (111) and a second air port (122);
an air supply pipeline (21);
a pressure accumulator (20) disposed on the air supply pipeline (21) and configured to supply air pressure to each of the plurality of air springs (10) through the first air port (111) and the second air port (122) of the air spring (10); and
a plurality of multi-way valves (30) configured to connect the plurality of air springs (10) with the air supply pipeline (21) and corresponding to the plurality of air springs (10) in one-to-one correspondence, wherein for each of the plurality of multi-way valves (30), when the multi-way valve (30) is in a first state, the first air port (111) of one of the plurality of air springs (10) corresponding to the multi-way valve (30) is connected to the air supply pipeline (21) through the multi-way valve, the second air port (122) of the air spring (10) is connected to the atmosphere through the multi-way valve, and the air spring (10) ascends under air supply of the pressure accumulator (20); and when the multi-way valve (30) is in a second state, the first air port (111) of the air spring (10) corresponding to the multi-way valve (30) is connected to the atmosphere through the multi-way valve, the second air port (122) of the air spring (10) is connected to the air supply pipeline (21) through the multi-way valve, and the air spring (10) descends under air supply of the pressure accumulator (20).

2. The air spring system (100) according to claim 1, further comprising an air pump (50) connected to the air supply pipeline (21), wherein the air pump (50) is configured to supply air to the plurality of air springs (10) through the plurality of multi-way valves (30) and to fill air into the pressure accumulator (20).

3. A vehicle (1000), comprising: the air spring system (100) according to claim 1, wherein the plurality of air springs (10) comprises a first air spring (11) configured to be disposed on a left front wheel of the vehicle (1000), a second air spring (12) configured to be disposed on a left rear wheel of the vehicle (1000), a third air spring (13) configured to be disposed on a right front wheel of the vehicle (1000), and a fourth air spring (14) configured to be disposed on a right rear wheel of the vehicle (1000); and
wherein the plurality of multi-way valves (30) comprises a first multi-way valve (31) configured to connect the first air spring (11) with the air supply pipeline (21), a second multi-way valve (32) configured to connect the second air spring (12) with the air supply pipeline (21), a third multi-way valve (33) configured to connect the third air spring (13) with the air supply pipeline (21), and a fourth multi-way valve (34) configured to connect the fourth air spring (14) with the air supply pipeline (21).

4. The vehicle (1000) according to claim 3, further comprising a first connecting pipeline (71), a second connecting pipeline (72), a third connecting pipeline (73), a fourth connecting pipeline (74), a first pass valve (81) disposed on the first connecting pipeline (71), a second pass valve (82) disposed on the second connecting pipeline (72), a third pass valve (83) disposed on the third connecting pipeline (73), and a fourth pass valve (84) disposed on the fourth connecting pipeline (74),
wherein one end of the first connecting pipeline (71) is connected to the first air port (111) of the first air spring (11), and the other end of the first connecting pipeline (71) is connected to the second air port (122) of the second air spring (12); one end of the second connecting pipeline (72) is connected to the second air port (122) of the second air spring (12), and the other end of the second connecting pipeline (72) is connected to the first air port (111) of the fourth air spring (14); one end of the third connecting pipeline (73) is connected to the first air port (111) of the third air spring (13), and the other end of the third connecting pipeline (73) is connected to the second air port (122) of the fourth air spring (14); and one end of the fourth connecting pipeline (74) is connected to the first air port (111) of the third air spring (13), and the other end of the fourth connecting pipeline (74) is connected to the second air port (122) of the first air spring (11).

5. The vehicle (1000) according to claim 4, wherein when a front side, a left side or a right side of the vehicle (1000) approaches a target object, among the first multi-way valve (31), the second multi-way valve (32), the third multi-way valve (33), and the fourth multi-way valve (34), two multi-way valves (30) close to the target object are in the first state, the other two multi-way valves (30) are in a third state; the first pass valve (81), the second pass valve (82), the third pass valve (83), and the fourth pass valve (84) are all in a cut-off state; among the first air spring (11), the second air spring (12), the third air spring (13), and the fourth air spring (14), the first air ports (111) and the second air ports (122) of two air springs (10) corresponding to the other two multi-way valves (30) in the third state are isolated from the pressure accumulator (20), and states of the two air springs (10) remain unchanged, and the other two air springs (10) are capable of ascending under the air supply of the pressure accumulator (20).

6. The vehicle (1000) according to claim 4, wherein when an angle of turning of the vehicle (1000) is greater than a preset angle and a vehicle speed of the vehicle (1000) is greater than a preset speed, among the first multi-way valve (31), the second multi-way valve (32), the third multi-way valve (33), and the fourth multi-way valve (34), two multi-way valves (30) corresponding to a direction of the turning of the vehicle (1000) are in a second state, the other two multi-way valves (30) are in the first state; the first pass valve (81) and the third pass valve (83) are in a cut-off state, and the second pass valve (82) and the fourth pass valve (84) are in a connected state; among the first air spring (11), the second air spring (12), the third air spring (13), and the fourth air spring (14), two air springs (10) corresponding to the two multi-way valves (30) in the second state are isolated from the pressure accumulator (20) with the first air ports (111) and the second air ports (122) thereof and are capable of descending under the air supply of the pressure accumulator (20), and the other two air springs (10) are capable of ascending under air supply of the pressure accumulator (20).

7. The vehicle (1000) according to claim 4, wherein when the vehicle (1000) is in a bumpy state, each of the plurality of multi-way valves (30) is in a third state; the second pass valve (82) and the fourth pass valve (84) are in a cut-off state, the first pass valve (81) and the third pass valve (83) are in a connected state; the first air port (111) of the first air spring (11) is connected to the second air port (122) of the second air spring (12) through the first connecting pipeline (71), and the first air port (111) of the third air spring (13) is connected to the second air port (122) of the fourth air spring (14) through the third connecting pipeline (73).

8. The vehicle (1000) according to claim 4, wherein when a number of turnings of the vehicle (1000) within a predetermined time period is greater than a preset number, each of the multi-way valves (30) is in a third state; the first pass valve (81) and the third pass valve (83) are in a cut-off state, and the second pass valve (82) and the fourth pass valve (84) are in a connected state; the second air port (122) of the first air spring (11) is connected to the second air port (122) of the third air spring (13) through the fourth connecting pipeline (74), and the second air port (122) of the second air spring (12) is connected to the first air port (111) of the fourth air spring (14) through the second connecting pipeline (72).

9. The vehicle (1000) according to claim 4, when a rear side of the vehicle (1000) approaches a target object, among the first multi-way valve (31), the second multi-way valve (32), the third multi-way valve (33), and the fourth multi-way valve (34), two multi-way valves (30) close to the target object are in a second state, the other two multi-way valves (30) are in a third state; the first pass valve (81), the second pass valve (82), the third pass valve (83), and the fourth pass valve (84) are all in a cut-off state; among the first air spring (11), the second air spring (12), the third air spring (13), and the fourth air spring (14), two air springs corresponding to the two multi-way valves (30) in the second state are isolated from the pressure accumulator (20) with the first air ports (111) and the second air ports (122) thereof and are capable of descending under the air supply of the pressure accumulator (20), and states of the other two air springs (10) remain unchanged.

10. The vehicle (1000) according to any one of claims 3 to 9, further comprising:
a body, wherein the air spring system (100) is disposed on the body.

11. A control method for a vehicle (1000) with an air spring system (100), wherein the air spring system (100) comprises:
a plurality of air springs (10), wherein each of the plurality of air springs (10) is disposed to correspond to a suspension of the vehicle (1000) and has a first air port (111) and a second air port (122);
a pressure accumulator (20) disposed on an air supply pipeline (21) and configured to supply air pressure to each of the plurality of air springs (10) through the first air port (111) and the second air port (122) of the air spring (10); and
a plurality of multi-way valves (30) configured to connect the plurality of air springs (10) with the air supply pipeline (21) and corresponding to the plurality of air springs (10) in one-to-one correspondence, and
wherein the control method comprises:
(S10) controlling one of the plurality of multi-way valves (30) to be in a first state to connect the first air port (111) of one of the plurality of air springs (10) corresponding to the multi-way valve (30) to the air supply pipeline (21) through the multi-way valve, and to connect the second air port (122) of the air spring (10) to the atmosphere through the multi-way valve;
(S20) controlling the pressure accumulator (20) to work to allow the air spring (10) corresponding to the multi-way valve (30) to ascend under air supply of the pressure accumulator (20) when the multi-way valve (30) is in the first state;
(S30) controlling one of the plurality of multi-way valves (30) to be in a second state to connect the first air port (111) of one of the plurality of air springs (10) corresponding to the multi-way valve (30) to the atmosphere through the multi-way valve, and to connect the second air port (122) of the air spring (10) to the air supply pipeline (21) through the multi-way valve; and
(S40) controlling the pressure accumulator (20) to work to allow the air spring (10) corresponding to the multi-way valve (30) to descend under the air supply of the pressure accumulator (20) when the multi-way valve (30) is in the second state.

12. The control method according to claim 11, wherein the plurality of air springs (10) comprises a first air spring (11) configured to be disposed on a left front wheel of the vehicle (1000), a second air spring (12) configured to be disposed on a left rear wheel of the vehicle (1000), a third air spring (13) configured to be disposed on a right front wheel of the vehicle (1000), and a fourth air spring (14) configured to be disposed on a right rear wheel of the vehicle (1000);
wherein the plurality of multi-way valves (30) comprises a first multi-way valve (31) configured to connect the first air spring (11) with the air supply pipeline (21), a second multi-way valve (32) configured to connect the second air spring (12) with the air supply pipeline (21), a third multi-way valve (33) configured to connect the third air spring (13) with the air supply pipeline (21), and a fourth multi-way valve (34) configured to connect the fourth air spring (14) with the air supply pipeline (21);
wherein the air spring system (100) further comprises a first connecting pipeline (71), a second connecting pipeline (72), a third connecting pipeline (73), a fourth connecting pipeline (74), a first pass valve (81) disposed on the first connecting pipeline (71), a second pass valve (82) disposed on the second connecting pipeline (72), a third pass valve (83) disposed on the third connecting pipeline (73), and a fourth pass valve (84) disposed on the fourth connecting pipeline (74);
wherein one end of the first connecting pipeline (71) is connected to the first air port (111) of the first air spring (11), and the other end of the first connecting pipeline (71) is connected to the second air port (122) of the second air spring (12); one end of the second connecting pipeline (72) is connected to the second air port (122) of the second air spring (12), and the other end of the second connecting pipeline (72) is connected to the first air port (111) of the fourth air spring (14); one end of the third connecting pipeline (73) is connected to the first air port (111) of the third air spring (13), and the other end of the third connecting pipeline (73) is connected to the second air port (122) of the fourth air spring (14); and one end of the fourth connecting pipeline (74) is connected to the first air port (111) of the third air spring (13), and the other end of the fourth connecting pipeline (74) is connected to the second air port (122) of the first air spring (11);
wherein the control method comprises:
(S50) when a front side, a left side or a right side of the vehicle (1000) approaches a target object, among the first multi-way valve (31), the second multi-way valve (32), the third multi-way valve (33), and the fourth multi-way valve (34), controlling two multi-way valves (30) close to the target object to be in the first state, and controlling the other two multi-way valves (30) to be in a third state, wherein among the first air spring (11), the second air spring (12), the third air spring (13), and the fourth air spring (14), the first air ports (111) and the second air ports (122) of two air springs corresponding to the other two multi-way valves (30) in the third state are isolated from the pressure accumulator (20);
(S60) controlling the first pass valve (81), the second pass valve (82), the third pass valve (83) and the fourth pass valve (84) to be in a cut-off state; and
(S70) controlling the pressure accumulator (20) to work to allow the other two air springs (10) close the target object to ascend under the air supply of the pressure accumulator (20), and to allow states of the two air springs (10) corresponding to the other two multi-way valves (30) in the third state to remain unchanged.

13. The control method according to claim 11, wherein the plurality of air springs (10) comprises a first air spring (11) configured to be disposed on a left front wheel of the vehicle (1000), a second air spring (12) configured to be disposed on a left rear wheel of the vehicle (1000), a third air spring (13) configured to be disposed on a right front wheel of the vehicle (1000), and a fourth air spring (14) configured to be disposed on a right rear wheel of the vehicle (1000);
wherein the plurality of multi-way valves (30) comprises a first multi-way valve (31) configured to connect the first air spring (11) with the air supply pipeline (21), a second multi-way valve (32) configured to connect the second air spring (12) with the air supply pipeline (21), a third multi-way valve (33) configured to connect the third air spring (13) with the air supply pipeline (21), and a fourth multi-way valve (34) configured to connect the fourth air spring (14) with the air supply pipeline (21);
wherein the air spring system (100) further comprises a first connecting pipeline (71), a second connecting pipeline (72), a third connecting pipeline (73), a fourth connecting pipeline (74), a first pass valve (81) disposed on the first connecting pipeline (71), a second pass valve (82) disposed on the second connecting pipeline (72), a third pass valve (83) disposed on the third connecting pipeline (73), and a fourth pass valve (84) disposed on the fourth connecting pipeline (74);
wherein one end of the first connecting pipeline (71) is connected to the first air port (111) of the first air spring (11), and the other end of the first connecting pipeline (71) is connected to the second air port (122) of the second air spring (12); one end of the second connecting pipeline (72) is connected to the second air port (122) of the second air spring (12), and the other end of the second connecting pipeline (72) is connected to the first air port (111) of the fourth air spring (14); one end of the third connecting pipeline (73) is connected to the first air port (111) of the third air spring (13), and the other end of the third connecting pipeline (73) is connected to the second air port (122) of the fourth air spring (14); and one end of the fourth connecting pipeline (74) is connected to the first air port (111) of the third air spring (13), and the other end of the fourth connecting pipeline (74) is connected to the second air port (122) of the first air spring (11);
wherein the control method comprises:
(S80) when an angle of turning of the vehicle (1000) is greater than a preset angle and a vehicle speed of the vehicle (1000) is greater than a preset speed, among the first multi-way valve (31), the second multi-way valve (32), the third multi-way valve (33), and the fourth multi-way valve (34), controlling two multi-way valves (30) corresponding to a direction of the turning of the vehicle (1000) to be in a second state, and controlling the other two multi-way valves (30) to be in the first state, wherein the first air ports (111) and the second air ports (122) of two air springs (10) corresponding to the two multi-way valves (30) in the second state are isolated from the pressure accumulator (20);
(S90) controlling the first pass valve (81) and the third pass valve (83) to be in a cut-off state, and controlling the second pass valve (82) and the fourth pass valve (84) to be in a connected state; and
(S100) controlling the pressure accumulator (20) to work to allow the two air springs (10) corresponding to the two multi-way valves (30) in the second state to descend under air supply of the pressure accumulator (20), and to allow the other two air springs (10) to ascend under air supply of the pressure accumulator (20).

14. The control method according to claim 11, wherein the plurality of air springs (10) include a first air spring (11) configured to be disposed on a left front wheel of the vehicle (1000), a second air spring (12) configured to be disposed on a left rear wheel of the vehicle (1000), a third air spring (13) configured to be disposed on a right front wheel of the vehicle (1000), and a fourth air spring (14) configured to be disposed on a right rear wheel of the vehicle (1000);
wherein the plurality of multi-way valves (30) comprises a first multi-way valve (31) configured to connect the first air spring (11) with the air supply pipeline (21), a second multi-way valve (32) configured to connect the second air spring (12) with the air supply pipeline (21), a third multi-way valve (33) configured to connect the third air spring (13) with the air supply pipeline (21), and a fourth multi-way valve (34) configured to connect the fourth air spring (14) with the air supply pipeline (21);
wherein the air spring system (100) further comprises a first connecting pipeline (71), a second connecting pipeline (72), a third connecting pipeline (73), a fourth connecting pipeline (74), a first pass valve (81) disposed on the first connecting pipeline (71), a second pass valve (82) disposed on the second connecting pipeline (72), a third pass valve (83) disposed on the third connecting pipeline (73), and a fourth pass valve (84) disposed on the fourth connecting pipeline (74);
wherein one end of the first connecting pipeline (71) is connected to the first air port (111) of the first air spring (11), and the other end of the first connecting pipeline (71) is connected to the second air port (122) of the second air spring (12); one end of the second connecting pipeline (72) is connected to the second air port (122) of the second air spring (12), and the other end of the second connecting pipeline (72) is connected to the first air port (111) of the fourth air spring (14); one end of the third connecting pipeline (73) is connected to the first air port (111) of the third air spring (13), and the other end of the third connecting pipeline (73) is connected to the second air port (122) of the fourth air spring (14); and one end of the fourth connecting pipeline (74) is connected to the first air port (111) of the third air spring (13), and the other end of the fourth connecting pipeline (74) is connected to the second air port (122) of the first air spring (11);
wherein the control method comprises:
(S110) when the vehicle (1000) is in a bumpy state, controlling each of the plurality of multi-way valves (30) to be in a third state; and
(S120) controlling the second pass valve (82) and the fourth pass valve (84) to be in a cut-off state, and controlling the first pass valve (81) and the third pass valve (83) to be in a connected state, wherein the first air port (111) of the first air spring (11) is connected to the second air port (122) of the second air spring (12) through the first connecting pipeline (71), and the first air port (111) of the third air spring (13) is connected to the second air port (122) of the fourth air spring (14) through the third connecting pipeline (73).

15. The control method according to claim 11, wherein the plurality of air springs (10) comprises a first air spring (11) configured to be disposed on a left front wheel of the vehicle (1000), a second air spring (12) configured to be disposed on a left rear wheel of the vehicle (1000), a third air spring (13) configured to be disposed on a right front wheel of the vehicle (1000), and a fourth air spring (14) configured to be disposed on a right rear wheel of the vehicle (1000);
wherein the plurality of multi-way valves (30) comprises a first multi-way valve (31) configured to connect the first air spring (11) with the air supply pipeline (21), a second multi-way valve (32) configured to connect the second air spring (12) with the air supply pipeline (21), a third multi-way valve (33) configured to connect the third air spring (13) with the air supply pipeline (21), and a fourth multi-way valve (34) configured to connect the fourth air spring (14) with the air supply pipeline (21);
wherein air spring system (100) further comprises a first connecting pipeline (71), a second connecting pipeline (72), a third connecting pipeline (73), a fourth connecting pipeline (74), a first pass valve (81) disposed on the first connecting pipeline (71), a second pass valve (82) disposed on the second connecting pipeline (72), a third pass valve (83) disposed on the third connecting pipeline (73), and a fourth pass valve (84) disposed on the fourth connecting pipeline (74);
wherein one end of the first connecting pipeline (71) is connected to the first air port (111) of the first air spring (11), and the other end of the first connecting pipeline (71) is connected to the second air port (122) of the second air spring (12); one end of the second connecting pipeline (72) is connected to the second air port (122) of the second air spring (12), and the other end of the second connecting pipeline (72) is connected to the first air port (111) of the fourth air spring (14); one end of the third connecting pipeline (73) is connected to the first air port (111) of the third air spring (13), and the other end of the third connecting pipeline (73) is connected to the second air port (122) of the fourth air spring (14); and one end of the fourth connecting pipeline (74) is connected to the first air port (111) of the third air spring (13), and the other end of the fourth connecting pipeline (74) is connected to the second air port (122) of the first air spring (11);
wherein the control method comprises:
(S130) when a number of turnings of the vehicle (1000) within a predetermined time period is greater than a preset number, controlling all of the plurality of multi-way valves (30) to be in a third state; and
(S140) controlling the first pass valve (81) and the third pass valve (83) to be in a cut-off state, and controlling the second pass valve (82) and the fourth pass valve (84) to be in a connected state, wherein the second air port (122) of the first air spring (11) is connected to the second air port (122) of the third air spring (13) through the fourth connecting pipeline (74), and the second air port (122) of the second air spring (12) is connected to the first air port (111) of the fourth air spring (14) through the second connecting pipeline (72).

## Patentansprüche

1. Luftfedersystem (100) für ein Fahrzeug (1000), wobei das Luftfedersystem (100) Folgendes umfasst:
eine Vielzahl von Luftfedern (10), wobei jede der Vielzahl von Luftfedern (10) dazu angeordnet ist, einer Federung des Fahrzeugs (1000) zu entsprechen, und einen ersten Luftanschluss (111) und einen zweiten Luftanschluss (122) aufweist;
eine Luftzufuhrleitung (21);
einen Druckspeicher (20), der auf der Luftzufuhrleitung (21) angeordnet ist und dazu konfiguriert ist, jeder der Vielzahl von Luftfedern (10) über den ersten Luftanschluss (111) und den zweiten Luftanschluss (122) der Luftfeder (10) Luftdruck zuzuführen; und
eine Vielzahl von Mehrwegeventilen (30), die dazu konfiguriert sind, die Vielzahl von Luftfedern (10) mit der Luftzufuhrleitung (21) zu verbinden, und der Vielzahl von Luftfedern (10) in Eins-zu-Eins-Entsprechung entsprechen, wobei für jedes der Vielzahl von Mehrwegeventilen (30), wenn sich das Mehrwegeventil (30) in einem ersten Zustand befindet, der erste Luftanschluss (111) von einer dem Mehrwegeventil (30) entsprechenden der Vielzahl von Luftfedern (10) über das Mehrwegeventil mit der Luftzufuhrleitung (21) verbunden ist, der zweite Luftanschluss (122) der Luftfeder (10) über das Mehrwegeventil mit der Atmosphäre verbunden ist und die Luftfeder (10) unter Luftzufuhr des Druckspeichers (20) hochfährt; und wenn sich das Mehrwegeventil (30) in einem zweiten Zustand befindet, der erste Luftanschluss (111) der dem Mehrwegeventil (30) entsprechenden Luftfeder (10) über das Mehrwegeventil mit der Atmosphäre verbunden ist, der zweite Luftanschluss (122) der Luftfeder (10) über das Mehrwegeventil mit der Luftzufuhrleitung (21) verbunden ist und die Luftfeder unter Luftzufuhr des Druckspeichers (20) herunterfährt.

2. Luftfedersystem (100) nach Anspruch 1, ferner umfassend eine Luftpumpe (50), die mit der Luftzufuhrleitung (21) verbunden ist, wobei die Luftpumpe (50) dazu konfiguriert ist, der Vielzahl von Luftfedern (10) über die Vielzahl von Mehrwegeventilen (30) Luft zuzuführen und Luft in den Druckspeicher (20) zu füllen.

3. Fahrzeug (1000), umfassend: Luftfedersystem (100) nach Anspruch 1, wobei die Vielzahl von Luftfedern (10) eine zum Anordnen an einem linken Vorderrad des Fahrzeugs (1000) konfigurierte erste Luftfeder (11), eine zum Anordnen an einem linken Hinterrad des Fahrzeugs (1000) konfigurierte zweite Luftfeder (12), eine zum Anordnen an einem rechten Vorderrad des Fahrzeugs (1000) konfigurierte dritte Luftfeder (13) und eine zum Anordnen an einem rechten Hinterrad des Fahrzeugs (1000) konfigurierte vierte Luftfeder (14) umfasst; und
wobei die Vielzahl von Mehrwegeventilen (30) ein zum Verbinden der ersten Luftfeder (11) mit der Luftzufuhrleitung (21) konfiguriertes erstes Mehrwegeventil (31), ein zum Verbinden der zweiten Luftfeder (12) mit der Luftzufuhrleitung (21) konfiguriertes zweites Mehrwegeventil (32), ein zum Verbinden der dritten Luftfeder (13) mit der Luftzufuhrleitung (21) konfiguriertes drittes Mehrwegeventil (33) und ein zum Verbinden der vierten Luftfeder (14) mit der Luftzufuhrleitung (21) konfiguriertes viertes Mehrwegeventil (34) umfasst.

4. Fahrzeug (1000) nach Anspruch 3, ferner umfassend eine erste Verbindungsleitung (71), eine zweite Verbindungsleitung (72), eine dritte Verbindungsleitung (73), eine vierte Verbindungsleitung (74), ein auf der ersten Verbindungsleitung (71) angeordnetes erstes Durchgangsventil (81), ein auf der zweiten Verbindungsleitung (72) angeordnetes zweites Durchgangsventil (82), ein auf der dritten Verbindungsleitung (73) angeordnetes drittes Durchgangsventil (83) und ein auf der vierten Verbindungsleitung (74) angeordnetes viertes Durchgangsventil (84),
wobei ein Ende der ersten Verbindungsleitung (71) mit dem ersten Luftanschluss (111) der ersten Luftfeder (11) verbunden ist und das andere Ende der ersten Verbindungsleitung (71) mit dem zweiten Luftanschluss (122) der zweiten Luftfeder (12) verbunden ist; ein Ende der zweiten Verbindungsleitung (72) mit dem zweiten Luftanschluss (122) der zweiten Luftfeder (12) verbunden ist und das andere Ende der zweiten Verbindungsleitung (72) mit dem ersten Luftanschluss (111) der vierten Luftfeder (14) verbunden ist; ein Ende der dritten Verbindungsleitung (73) mit dem ersten Luftanschluss (111) der dritten Luftfeder (13) verbunden ist und das andere Ende der dritten Verbindungsleitung (73) mit dem zweiten Luftanschluss (122) der vierten Luftfeder (14) verbunden ist; und ein Ende der vierten Verbindungsleitung (74) mit dem ersten Luftanschluss (111) der dritten Luftfeder (13) verbunden ist und das andere Ende der vierten Verbindungsleitung (74) mit dem zweiten Luftanschluss (122) der ersten Luftfeder (11) verbunden ist.

5. Fahrzeug (1000) nach Anspruch 4, wobei, wenn sich eine Frontseite, eine linke Seite oder eine rechte Seite des Fahrzeugs (1000) einem Zielobjekt nähert, unter dem ersten Mehrwegeventil (31), dem zweiten Mehrwegeventil (32), dem dritten Mehrwegeventil (33) und dem vierten Mehrwegeventil (34), sich zwei Mehrwegeventile (30) nah bei dem Zielobjekt in dem ersten Zustand befinden, sich die anderen zwei Mehrwegeventile (30) in einem dritten Zustand befinden; sich das erste Durchgangsventil (81), das zweite Durchgangventil (82), das dritte Durchgangsventil (83) und das vierte Durchgangsventil (84) alle in einem Absperrzustand befinden; unter der ersten Luftfeder (11), der zweiten Luftfeder (12), der dritten Luftfeder (13) und der vierten Luftfeder (14) die ersten Luftanschlüsse (111) und die zweiten Luftanschlüsse (122) von zwei den anderen zwei Mehrwegeventilen (30) in dem dritten Zustand entsprechenden Luftfedern (10) von dem Druckspeicher (20) getrennt sind und die Zustände der zwei Luftfedern (10) unverändert bleiben und die anderen zwei Luftfedern (10) in der Lage sind, unter der Luftzufuhr des Druckspeichers (20) hochzufahren.

6. Fahrzeug (1000) nach Anspruch 4, wobei, wenn ein Kurvenfahrtwinkel des Fahrzeugs (1000) größer als ein voreingestellter Winkel ist und eine Fahrzeuggeschwindigkeit des Fahrzeugs (1000) größer als eine voreingestellte Geschwindigkeit ist, unter dem ersten Mehrwegeventil (31), dem zweiten Mehrwegeventil (32), dem dritten Mehrwegeventil (33) und dem vierten Mehrwegeventil (34) sich zwei einer Richtung der Kurvenfahrt des Fahrzeugs (1000) entsprechende Mehrwegeventile (30) in einem zweiten Zustand befinden, sich die anderen zwei Mehrwegeventile (30) in dem ersten Zustand befinden; sich das erste Durchgangsventil (81) und das dritte Durchgangsventil (83) in einem Absperrzustand befinden und sich das zweite Durchgangsventil (82) und das vierte Durchgangsventil (84) in einem verbundenen Zustand befinden; unter der ersten Luftfeder (11), der zweiten Luftfeder (12), der dritten Luftfeder (13) und der vierten Luftfeder (14) zwei den zwei Mehrwegeventilen (30) in dem zweiten Zustand entsprechende Luftfedern (10) mit den ersten Luftanschlüssen (111) und den zweiten Luftanschlüssen (122) derselben von dem Druckspeicher (20) getrennt sind und in der Lage sind, unter der Luftzufuhr des Druckspeichers (20) herunterzufahren, und die anderen zwei Luftfedern (10) in der Lage sind, unter Luftzufuhr des Druckspeichers (20) hochzufahren.

7. Fahrzeug (1000) nach Anspruch 4, wobei, wenn sich das Fahrzeug (1000) in einem holpernden Zustand befindet, sich jedes der Vielzahl von Mehrwegeventilen (30) in einem dritten Zustand befindet; sich das zweite Durchgangsventil (82) und das vierte Durchgangsventil (84) in einem Absperrzustand befinden, sich das erste Durchgangsventil (81) und das dritte Durchgangsventil (83) in einem verbundenen Zustand befinden; der erste Luftanschluss (111) der ersten Luftfeder (11) über die erste Verbindungsleitung (71) mit dem zweiten Luftanschluss (122) der zweiten Luftfeder (12) verbunden ist und der erste Luftanschluss (111) der dritten Luftfeder (13) über die dritte Verbindungsleitung (73) mit dem zweiten Luftanschluss (122) der vierten Luftfeder (14) verbunden ist.

8. Fahrzeug (1000) nach Anspruch 4, wobei, wenn eine Anzahl von Kurvenfahrten des Fahrzeugs (1000) innerhalb eines vorgegebenen Zeitraums größer als eine voreingestellte Anzahl ist, sich jedes der Mehrwegeventile (30) in einem dritten Zustand befindet; sich das erste Durchgangsventil (81) und das dritte Durchgangsventil (83) in einem Absperrzustand befinden und sich das zweite Durchgangsventil (82) und das vierte Durchgangsventil (84) in einem verbundenen Zustand befinden; der zweite Luftanschluss (122) der ersten Luftfeder (11) über die vierte Verbindungsleitung (74) mit dem zweiten Luftanschluss (122) der dritten Luftfeder (13) verbunden ist und der zweite Luftanschluss (122) der zweiten Luftfeder (12) über die zweite Verbindungsleitung (72) mit dem ersten Luftanschluss (111) der vierten Luftfeder (14) verbunden ist.

9. Fahrzeug (1000) nach Anspruch 4, wobei, wenn sich eine Heckseite des Fahrzeugs (1000) einem Zielobjekt nähert, unter dem ersten Mehrwegeventil (31), dem zweiten Mehrwegeventil (32), dem dritten Mehrwegeventil (33) und dem vierten Mehrwegeventil (34) sich zwei Mehrwegeventile (30) nah bei dem Zielobjekt in einem zweiten Zustand befinden, sich die anderen zwei Mehrwegeventile (30) in einem dritten Zustand befinden; sich das erste Durchgangsventil (81), das zweite Durchgangventil (82), das dritte Durchgangsventil (83) und das vierte Durchgangsventil (84) alle in einem Absperrzustand befinden; unter der ersten Luftfeder (11), der zweiten Luftfeder (12), der dritten Luftfeder (13) und der vierten Luftfeder (14) zwei den zwei Mehrwegeventilen (30) in dem zweiten Zustand entsprechende Luftfedern mit den ersten Luftanschlüssen (111) und den zweiten Luftanschlüssen (122) derselben von dem Druckspeicher (20) getrennt sind und in der Lage sind, unter der Luftzufuhr des Druckspeichers (20) herunterzufahren, und die Zustände der anderen zwei Luftfedern (10) unverändert bleiben.

10. Fahrzeug (1000) nach einem der Ansprüche 3 bis 9, ferner umfassend:
eine Karosserie, wobei das Luftfedersystem (100) an der Karosserie angeordnet ist.

11. Steuerverfahren für ein Fahrzeug (1000) mit einem Luftfedersystem (100), wobei das Luftfedersystem (100) Folgendes umfasst:
eine Vielzahl von Luftfedern (10), wobei jede der Vielzahl von Luftfedern (10) dazu angeordnet ist, einer Federung des Fahrzeugs (1000) zu entsprechen, und einen ersten Luftanschluss (111) und einen zweiten Luftanschluss (122) aufweist;
einen Druckspeicher (20), der auf einer Luftzufuhrleitung (21) angeordnet ist und dazu konfiguriert ist, jeder der Vielzahl von Luftfedern (10) über den ersten Luftanschluss (111) und den zweiten Luftanschluss (122) der Luftfeder (10) Luftdruck zuzuführen; und
eine Vielzahl von Mehrwegeventilen (30), die dazu konfiguriert sind, die Vielzahl von Luftfedern (10) mit der Luftzufuhrleitung (21) zu verbinden, und der Vielzahl von Luftfedern (10) in Eins-zu-Eins-Entsprechung entsprechen, und
wobei das Steuerverfahren Folgendes umfasst:
(S10) Steuern eines der Vielzahl von Mehrwegeventilen (30) dazu, sich in einem ersten Zustand zu befinden, um den ersten Luftanschluss (111) einer dem Mehrwegeventil (30) entsprechenden der Vielzahl von Luftfedern (30) über das Mehrwegeventil mit der Luftzufuhrleitung (21) zu verbinden und den zweiten Luftanschluss (122) der Luftfeder (10) über das Mehrwegeventil mit der Atmosphäre zu verbinden;
(S20) Steuern des Druckspeichers (20) dazu, zu arbeiten, um es der dem Mehrwegeventil (30) entsprechenden Luftfeder (10) zu ermöglichen, unter Luftzufuhr des Druckspeichers (20) hochzufahren, wenn sich das Mehrwegeventil (30) in dem ersten Zustand befindet,
(S30) Steuern eines der Vielzahl von Mehrwegeventilen (30) dazu, sich in einem zweiten Zustand zu befinden, um den ersten Luftanschluss (111) einer dem Mehrwegeventil (30) entsprechenden der Vielzahl von Luftfedern (10) über das Mehrwegeventil mit der Atmosphäre zu verbinden und den zweiten Luftanschluss (122) der Luftfeder (10) über das Mehrwegeventil mit der Luftzufuhrleitung (21) zu verbinden; und
(S40) Steuern des Druckspeichers (20) dazu, zu arbeiten, um es der dem Mehrwegeventil (30) entsprechenden Luftfeder (10) zu ermöglichen, unter der Luftzufuhr des Druckspeichers (20) herunterzufahren, wenn sich das Mehrwegeventil (30) in dem zweiten Zustand befindet.

12. Steuerverfahren nach Anspruch 11, wobei die Vielzahl von Luftfedern (10) eine zum Anordnen an einem linken Vorderrad des Fahrzeugs (1000) konfigurierte erste Luftfeder (11), eine zum Anordnen an einem linken Hinterrad des Fahrzeugs (1000) konfigurierte zweite Luftfeder (12), eine zum Anordnen an einem rechten Vorderrad des Fahrzeugs (1000) konfigurierte dritte Luftfeder (13) und eine zum Anordnen an einem rechten Hinterrad des Fahrzeugs (1000) konfigurierte vierte Luftfeder (14) umfasst;
wobei die Vielzahl von Mehrwegeventilen (30) ein zum Verbinden der ersten Luftfeder (11) mit der Luftzufuhrleitung (21) konfiguriertes erstes Mehrwegeventil (31), ein zum Verbinden der zweiten Luftfeder (12) mit der Luftzufuhrleitung (21) konfiguriertes zweites Mehrwegeventil (32), ein zum Verbinden der dritten Luftfeder (13) mit der Luftzufuhrleitung (21) konfiguriertes drittes Mehrwegeventil (33) und ein zum Verbinden der vierten Luftfeder (14) mit der Luftzufuhrleitung (21) konfiguriertes viertes Mehrwegeventil (34) umfasst;
wobei das Luftfedersystem (100) ferner eine erste Verbindungsleitung (71), eine zweite Verbindungsleitung (72), eine dritte Verbindungsleitung (73), eine vierte Verbindungsleitung (74), ein auf der ersten Verbindungsleitung (71) angeordnetes erstes Durchgangsventil (81), ein auf der zweiten Verbindungsleitung (72) angeordnetes zweites Durchgangsventil (82), ein auf der dritten Verbindungsleitung (73) angeordnetes drittes Durchgangsventil (83) und ein auf der vierten Verbindungsleitung (74) angeordnetes viertes Durchgangsventil (84) umfasst;
wobei ein Ende der ersten Verbindungsleitung (71) mit dem ersten Luftanschluss (111) der ersten Luftfeder (11) verbunden ist und das andere Ende der ersten Verbindungsleitung (71) mit dem zweiten Luftanschluss (122) der zweiten Luftfeder (12) verbunden ist; ein Ende der zweiten Verbindungsleitung (72) mit dem zweiten Luftanschluss (122) der zweiten Luftfeder (12) verbunden ist und das andere Ende der zweiten Verbindungsleitung (72) mit dem ersten Luftanschluss (111) der vierten Luftfeder (14) verbunden ist; ein Ende der dritten Verbindungsleitung (73) mit dem ersten Luftanschluss (111) der dritten Luftfeder (13) verbunden ist und das andere Ende der dritten Verbindungsleitung (73) mit dem zweiten Luftanschluss (122) der vierten Luftfeder (14) verbunden ist; und ein Ende der vierten Verbindungsleitung (74) mit dem ersten Luftanschluss (111) der dritten Luftfeder (13) verbunden ist und das andere Ende der vierten Verbindungsleitung (74) mit dem zweiten Luftanschluss (122) der ersten Luftfeder (11) verbunden ist;
wobei das Steuerverfahren Folgendes umfasst:
(S50) wenn sich eine Frontseite, eine linke Seite oder eine rechte Seite des Fahrzeugs (1000) einem Zielobjekt nähert, Steuern, unter dem ersten Mehrwegegentil (31), dem zweiten Mehrwegeventil (32), dem dritten Mehrwegeventil (33) und dem vierten Mehrwegeventil (34), von zwei Mehrwegeventilen (30) nah bei dem Zielobjekt dazu, sich in dem ersten Zustand zu befinden, und Steuern der anderen zwei Mehrwegeventile (30) dazu, sich in einem dritten Zustand zu befinden, wobei unter der ersten Luftfeder (11), der zweiten Luftfeder (12), der dritten Luftfeder (13) und der vierten Luftfeder (14) die ersten Luftanschlüsse (111) und die zweiten Luftanschlüsse (122) von zwei den anderen zwei Mehrwegeventilen (30) in dem dritten Zustand entsprechenden Luftfedern von dem Druckspeicher (20) getrennt sind;
(S60) Steuern des ersten Durchgangsventils (81), des zweiten Durchgangsventils (82), des dritten Durchgangsventils (83) und des vierten Durchgangsventils (84) dazu, sich in einem Absperrzustand zu befinden; und
(S70) Steuern des Druckspeichers (20) dazu, zu arbeiten, um es den anderen zwei Luftfedern (10) nah bei dem Zielobjekt zu ermöglichen, unter der Luftzufuhr des Druckspeichers (20) hochzufahren und zu ermöglichen, dass Zustände der den anderen zwei Mehrwegeventilen (30) in dem dritten Zustand entsprechenden zwei Luftfedern (10) unverändert bleiben.

13. Steuerverfahren nach Anspruch 11, wobei die Vielzahl von Luftfedern (10) eine zum Anordnen an einem linken Vorderrad des Fahrzeugs (1000) konfigurierte erste Luftfeder (11), eine zum Anordnen an einem linken Hinterrad des Fahrzeugs (1000) konfigurierte zweite Luftfeder (12), eine zum Anordnen an einem rechten Vorderrad des Fahrzeugs (1000) konfigurierte dritte Luftfeder (13) und eine zum Anordnen an einem rechten Hinterrad des Fahrzeugs (1000) konfigurierte vierte Luftfeder (14) umfasst; und
wobei die Vielzahl von Mehrwegeventilen (30) ein zum Verbinden der ersten Luftfeder (11) mit der Luftzufuhrleitung (21) konfiguriertes erstes Mehrwegeventil (31), ein zum Verbinden der zweiten Luftfeder (12) mit der Luftzufuhrleitung (21) konfiguriertes zweites Mehrwegeventil (32), ein zum Verbinden der dritten Luftfeder (13) mit der Luftzufuhrleitung (21) konfiguriertes drittes Mehrwegeventil (33) und ein zum Verbinden der vierten Luftfeder (14) mit der Luftzufuhrleitung (21) konfiguriertes viertes Mehrwegeventil (34) umfasst;
wobei das Luftfedersystem (100) ferner eine erste Verbindungsleitung (71), eine zweite Verbindungsleitung (72), eine dritte Verbindungsleitung (73), eine vierte Verbindungsleitung (74), ein auf der ersten Verbindungsleitung (71) angeordnetes erstes Durchgangsventil (81), ein auf der zweiten Verbindungsleitung (72) angeordnetes zweites Durchgangsventil (82), ein auf der dritten Verbindungsleitung (73) angeordnetes drittes Durchgangsventil (83) und ein auf der vierten Verbindungsleitung (74) angeordnetes viertes Durchgangsventil (84) umfasst;
wobei ein Ende der ersten Verbindungsleitung (71) mit dem ersten Luftanschluss (111) der ersten Luftfeder (11) verbunden ist und das andere Ende der ersten Verbindungsleitung (71) mit dem zweiten Luftanschluss (122) der zweiten Luftfeder (12) verbunden ist; ein Ende der zweiten Verbindungsleitung (72) mit dem zweiten Luftanschluss (122) der zweiten Luftfeder (12) verbunden ist und das andere Ende der zweiten Verbindungsleitung (72) mit dem ersten Luftanschluss (111) der vierten Luftfeder (14) verbunden ist; ein Ende der dritten Verbindungsleitung (73) mit dem ersten Luftanschluss (111) der dritten Luftfeder (13) verbunden ist und das andere Ende der dritten Verbindungsleitung (73) mit dem zweiten Luftanschluss (122) der vierten Luftfeder (14) verbunden ist; und ein Ende der vierten Verbindungsleitung (74) mit dem ersten Luftanschluss (111) der dritten Luftfeder (13) verbunden ist und das andere Ende der vierten Verbindungsleitung (74) mit dem zweiten Luftanschluss (122) der ersten Luftfeder (11) verbunden ist;
wobei das Steuerverfahren Folgendes umfasst:
(S80) wenn ein Kurvenfahrtwinkel des Fahrzeugs (1000) größer als ein voreingestellter Winkel ist und eine Fahrzeuggeschwindigkeit des Fahrzeugs (1000) größer als eine voreingestellte Geschwindigkeit ist, Steuern, unter dem erstem Mehrwegeventil (31), dem zweiten Mehrwegeventil (32), dem dritten Mehrwegeventil (33) und dem vierten Mehrwegeventil (34), von zwei einer Richtung der Kurvenfahrt des Fahrzeugs (1000) entsprechenden Mehrwegeventilen (30) dazu, sich in einem zweiten Zustand zu befinden, und Steuern der anderen zwei Mehrwegeventile (30) dazu sich in dem ersten Zustand zu befinden, wobei die ersten Luftanschlüsse (111) und die zweiten Luftanschlüsse (122) von zwei den zwei Mehrwegeventilen (30) in dem zweiten Zustand entsprechenden Luftfedern (10) von dem Druckspeicher (20) getrennt sind;
(S90) Steuern des ersten Durchgangsventils (81) und des dritten Durchgangsventils (83) dazu, sich in einem Absperrzustand zu befinden, und Steuern des zweiten Durchgangsventils (82) und des vierten Durchgangsventils (84) dazu, sich in einem verbundenen Zustand zu befinden; und
(S100) Steuern des Druckspeichers (20) dazu, zu arbeiten, um den zwei den zwei Mehrwegeventilen (30) in dem zweiten Zustand entsprechenden Luftfedern (10) zu ermöglichen, unter Luftzufuhr des Druckspeichers (20) herunterzufahren, und den anderen zwei Luftfedern (10) zu ermöglichen, unter Luftzufuhr des Druckspeichers (20) hochzufahren.

14. Steuerverfahren nach Anspruch 11, wobei die Vielzahl von Luftfedern (10) eine zum Anordnen an einem linken Vorderrad des Fahrzeugs (1000) konfigurierte erste Luftfeder (11), eine zum Anordnen an einem linken Hinterrad des Fahrzeugs (1000) konfigurierte zweite Luftfeder (12), eine zum Anordnen an einem rechten Vorderrad des Fahrzeugs (1000) konfigurierte dritte Luftfeder (13) und eine zum Anordnen an einem rechten Hinterrad des Fahrzeugs (1000) konfigurierte vierte Luftfeder (14) umfasst;
wobei die Vielzahl von Mehrwegeventilen (30) ein zum Verbinden der ersten Luftfeder (11) mit der Luftzufuhrleitung (21) konfiguriertes erstes Mehrwegeventil (31), ein zum Verbinden der zweiten Luftfeder (12) mit der Luftzufuhrleitung (21) konfiguriertes zweites Mehrwegeventil (32), ein zum Verbinden der dritten Luftfeder (13) mit der Luftzufuhrleitung (21) konfiguriertes drittes Mehrwegeventil (33) und ein zum Verbinden der vierten Luftfeder (14) mit der Luftzufuhrleitung (21) konfiguriertes viertes Mehrwegeventil (34) umfasst;
wobei das Luftfedersystem (100) ferner eine erste Verbindungsleitung (71), eine zweite Verbindungsleitung (72), eine dritte Verbindungsleitung (73), eine vierte Verbindungsleitung (74), ein auf der ersten Verbindungsleitung (71) angeordnetes erstes Durchgangsventil (81), ein auf der zweiten Verbindungsleitung (72) angeordnetes zweites Durchgangsventil (82), ein auf der dritten Verbindungsleitung (73) angeordnetes drittes Durchgangsventil (83) und ein auf der vierten Verbindungsleitung (74) angeordnetes viertes Durchgangsventil (84) umfasst;
wobei ein Ende der ersten Verbindungsleitung (71) mit dem ersten Luftanschluss (111) der ersten Luftfeder (11) verbunden ist und das andere Ende der ersten Verbindungsleitung (71) mit dem zweiten Luftanschluss (122) der zweiten Luftfeder (12) verbunden ist; ein Ende der zweiten Verbindungsleitung (72) mit dem zweiten Luftanschluss (122) der zweiten Luftfeder (12) verbunden ist und das andere Ende der zweiten Verbindungsleitung (72) mit dem ersten Luftanschluss (111) der vierten Luftfeder (14) verbunden ist; ein Ende der dritten Verbindungsleitung (73) mit dem ersten Luftanschluss (111) der dritten Luftfeder (13) verbunden ist und das andere Ende der dritten Verbindungsleitung (73) mit dem zweiten Luftanschluss (122) der vierten Luftfeder (14) verbunden ist; und ein Ende der vierten Verbindungsleitung (74) mit dem ersten Luftanschluss (111) der dritten Luftfeder (13) verbunden ist und das andere Ende der vierten Verbindungsleitung (74) mit dem zweiten Luftanschluss (122) der ersten Luftfeder (11) verbunden ist;
wobei das Steuerverfahren Folgendes umfasst:
(S110) wenn sich das Fahrzeug (1000) in einem holpernden Zustand befindet, Steuern jedes der Vielzahl von Mehrwegeventilen (30) dazu, sich in einem dritten Zustand zu befinden; und
(S120) Steuern des zweiten Durchgangsventils (82) und des vierten Durchgangsventils (84) dazu, sich in einem Absperrzustand befinden, und Steuern des ersten Durchgangsventils (81) und des dritten Durchgangsventils (83) dazu, sich in einem verbundenen Zustand zu befinden; wobei der erste Luftanschluss (111) der ersten Luftfeder (11) über die erste Verbindungsleitung (71) mit dem zweiten Luftanschluss (122) der zweiten Luftfeder (12) verbunden ist und der erste Luftanschluss (111) der dritten Luftfeder (13) über die dritte Verbindungsleitung (73) mit dem zweiten Luftanschluss (122) der vierten Luftfeder (14) verbunden ist.

15. Steuerverfahren nach Anspruch 11, wobei die Vielzahl von Luftfedern (10) eine zum Anordnen an einem linken Vorderrad des Fahrzeugs (1000) konfigurierte erste Luftfeder (11), eine zum Anordnen an einem linken Hinterrad des Fahrzeugs (1000) konfigurierte zweite Luftfeder (12), eine zum Anordnen an einem rechten Vorderrad des Fahrzeugs (1000) konfigurierte dritte Luftfeder (13) und eine zum Anordnen an einem rechten Hinterrad des Fahrzeugs (1000) konfigurierte vierte Luftfeder (14) umfasst; und
wobei die Vielzahl von Mehrwegeventilen (30) ein zum Verbinden der ersten Luftfeder (11) mit der Luftzufuhrleitung (21) konfiguriertes erstes Mehrwegeventil (31), ein zum Verbinden der zweiten Luftfeder (12) mit der Luftzufuhrleitung (21) konfiguriertes zweites Mehrwegeventil (32), ein zum Verbinden der dritten Luftfeder (13) mit der Luftzufuhrleitung (21) konfiguriertes drittes Mehrwegeventil (33) und ein zum Verbinden der vierten Luftfeder (14) mit der Luftzufuhrleitung (21) konfiguriertes viertes Mehrwegeventil (34) umfasst;
wobei das Luftfedersystem (100) ferner eine erste Verbindungsleitung (71), eine zweite Verbindungsleitung (72), eine dritte Verbindungsleitung (73), eine vierte Verbindungsleitung (74), ein auf der ersten Verbindungsleitung (71) angeordnetes erstes Durchgangsventil (81), ein auf der zweiten Verbindungsleitung (72) angeordnetes zweites Durchgangsventil (82), ein auf der dritten Verbindungsleitung (73) angeordnetes drittes Durchgangsventil (83) und ein auf der vierten Verbindungsleitung (74) angeordnetes viertes Durchgangsventil (84) umfasst;
wobei ein Ende der ersten Verbindungsleitung (71) mit dem ersten Luftanschluss (111) der ersten Luftfeder (11) verbunden ist und das andere Ende der ersten Verbindungsleitung (71) mit dem zweiten Luftanschluss (122) der zweiten Luftfeder (12) verbunden ist; ein Ende der zweiten Verbindungsleitung (72) mit dem zweiten Luftanschluss (122) der zweiten Luftfeder (12) verbunden ist und das andere Ende der zweiten Verbindungsleitung (72) mit dem ersten Luftanschluss (111) der vierten Luftfeder (14) verbunden ist; ein Ende der dritten Verbindungsleitung (73) mit dem ersten Luftanschluss (111) der dritten Luftfeder (13) verbunden ist und das andere Ende der dritten Verbindungsleitung (73) mit dem zweiten Luftanschluss (122) der vierten Luftfeder (14) verbunden ist; und ein Ende der vierten Verbindungsleitung (74) mit dem ersten Luftanschluss (111) der dritten Luftfeder (13) verbunden ist und das andere Ende der vierten Verbindungsleitung (74) mit dem zweiten Luftanschluss (122) der ersten Luftfeder (11) verbunden ist;
wobei das Steuerverfahren Folgendes umfasst:
(S130) wenn eine Anzahl von Kurvenfahrten des Fahrzeugs (1000) innerhalb eines vorgegebenen Zeitraums größer als eine voreingestellte Anzahl ist, Steuern aller der Vielzahl von Mehrwegeventilen (30) dazu, sich in einem dritten Zustand zu befinden; und
(S140) Steuern des ersten Durchgangsventils (81) und des dritten Durchgangsventils (83) dazu, sich in einem Absperrzustand zu befinden, und Steuern des zweiten Durchgangsventils (82) und des vierten Durchgangsventils (84) dazu, sich in einem verbundenen Zustand zu befinden, wobei der zweite Luftanschluss (122) der ersten Luftfeder (11) über die vierte Verbindungsleitung (74) mit dem zweiten Luftanschluss (122) der dritten Luftfeder (13) verbunden ist und der zweite Luftanschluss (122) der zweiten Luftfeder (12) über die zweite Verbindungsleitung (72) mit dem ersten Luftanschluss (111) der vierten Luftfeder (14) verbunden ist.

## Revendications

1. Système de ressort pneumatique (100) destiné à un véhicule (1000), le système de ressort pneumatique (100) comprenant :
une pluralité de ressorts pneumatiques (10), dans lequel chacun de la pluralité de ressorts pneumatiques (10) est disposé pour correspondre à une suspension du véhicule (1000) et présente un premier orifice d'admission d'air (111) et un second orifice d'admission d'air (122) ;
une conduite d'alimentation en air (21) ;
un accumulateur de pression (20) disposé sur la conduite d'alimentation en air (21) et configuré pour alimenter chacun de la pluralité de ressorts pneumatiques (10) en pression pneumatique par le biais du premier orifice d'admission d'air (111) et du second orifice d'admission d'air (122) du ressort pneumatique (10) ; et
une pluralité de robinets à plusieurs voies (30) configurés pour raccorder la pluralité de ressorts pneumatiques (10) avec la conduite d'alimentation en air (21) et correspondant à la pluralité de ressorts pneumatiques (10) en correspondance biunivoque, dans lequel pour chacun de la pluralité de robinets à plusieurs voies (30), lorsque le robinet à plusieurs voies (30) est dans un premier état, le premier orifice d'admission d'air (111) d'un de la pluralité de ressorts pneumatiques (10) correspondant au robinet à plusieurs voies (30) est raccordé à la conduite d'alimentation en air (21) par le biais du robinet à plusieurs voies, le second orifice d'admission d'air (122) du ressort pneumatique (10) est raccordé à l'atmosphère par le biais du robinet à plusieurs voies, et le ressort pneumatique (10) monte sous l'effet de l'alimentation en air de l'accumulateur de pression (20) ; et lorsque le robinet à plusieurs voies (30) est dans un second état, le premier orifice d'admission d'air (111) du ressort pneumatique (10) correspondant au robinet à plusieurs voies (30) est raccordé à l'atmosphère par le biais du robinet à plusieurs voies, le second orifice d'admission d'air (122) du ressort pneumatique (10) est raccordé à la conduite d'alimentation en air (21) par le biais du robinet à plusieurs voies, et le ressort pneumatique (10) descend sous l'effet de l'alimentation en air de l'accumulateur de pression (20).

2. Système de ressort pneumatique (100) selon la revendication 1, comprenant en outre une pompe pneumatique (50) reliée à la conduite d'alimentation en air (21), dans lequel la pompe pneumatique (50) est configurée pour alimenter en air la pluralité de ressorts pneumatiques (10) par le biais de la pluralité de robinets à plusieurs voies (30) et pour remplir l'accumulateur de pression (20) d'air.

3. Véhicule (1000), comprenant : le système de ressort pneumatique (100) selon la revendication 1, dans lequel la pluralité de ressorts pneumatiques (10) comprend un premier ressort pneumatique (11) configuré pour être disposé sur une roue avant gauche du véhicule (1000), un deuxième ressort pneumatique (12) configuré pour être disposé sur une roue arrière gauche du véhicule (1000), un troisième ressort pneumatique (13) configuré pour être disposé sur une roue avant droite du véhicule (1000), et un quatrième ressort pneumatique (14) configuré pour être disposé sur une roue arrière droite du véhicule (1000) ; et
dans lequel la pluralité de robinets à plusieurs voies (30) comprend un premier robinet à plusieurs voies (31) configuré pour raccorder le premier ressort pneumatique (11) à la conduite d'alimentation en air (21), un deuxième robinet à plusieurs voies (32) configuré pour raccorder le deuxième ressort pneumatique (12) à la conduite d'alimentation en air (21), un troisième robinet à plusieurs voies (33) configuré pour raccorder le troisième ressort pneumatique (13) à la conduite d'alimentation en air (21), et un quatrième robinet à plusieurs voies (34) configuré pour raccorder le quatrième ressort pneumatique (14) à la conduite d'alimentation en air (21).

4. Véhicule (1000) selon la revendication 3, comprenant en outre une première conduite de raccordement (71), une deuxième conduite de raccordement (72), une troisième conduite de raccordement (73), une quatrième conduite de raccordement (74), une première soupape de passage (81) disposée sur la première conduite de raccordement (71), une deuxième soupape de passage (82) disposée sur la deuxième conduite de raccordement (72), une troisième soupape de passage (83) disposée sur la troisième conduite de raccordement (73), et une quatrième soupape de passage (84) disposée sur la quatrième conduite de raccordement (74),
dans lequel une extrémité de la première conduite de raccordement (71) est raccordée au premier orifice d'admission d'air (111) du premier ressort pneumatique (11), et l'autre extrémité de la première conduite de raccordement (71) est raccordée au second orifice d'admission d'air (122) du deuxième ressort pneumatique (12) ; une extrémité de la deuxième conduite de raccordement (72) est raccordée au second orifice d'admission d'air (122) du deuxième ressort pneumatique (12), et l'autre extrémité de la deuxième conduite de raccordement (72) est raccordée au premier orifice d'admission d'air (111) du quatrième ressort pneumatique (14) ; une extrémité de la troisième conduite de raccordement (73) est raccordée au premier orifice d'admission d'air (111) du troisième ressort pneumatique (13), et l'autre extrémité de la troisième conduite de raccordement (73) est raccordée au second orifice d'admission d'air (122) du quatrième ressort pneumatique (14) ; et une extrémité de la quatrième conduite de raccordement (74) est raccordée au premier orifice d'admission d'air (111) du troisième ressort pneumatique (13), et l'autre extrémité de la quatrième conduite de raccordement (74) est raccordée au second orifice d'admission d'air (122) du premier ressort pneumatique (11).

5. Véhicule (1000) selon la revendication 4, dans lequel lorsqu'un côté avant, un côté gauche ou un côté droit du véhicule (1000) approche un objet cible, parmi le premier robinet à plusieurs voies (31), le deuxième robinet à plusieurs voies (32), le troisième robinet à plusieurs voies (33), et le quatrième robinet à plusieurs voies (34), deux robinets à plusieurs voies (30) proche de l'objet cible sont dans le premier état, les deux autres robinets à plusieurs voies (30) sont dans un troisième état ; la première soupape de passage (81), la deuxième soupape de passage (82), la troisième soupape de passage (83), et la quatrième soupape de passage (84) sont toutes dans un état de coupure ; parmi le premier ressort pneumatique (11), le deuxième ressort pneumatique (12), le troisième ressort pneumatique (13), et le quatrième ressort pneumatique (14), les premiers orifices d'admission d'air (111) et les seconds orifices d'admission d'air (122) de deux ressorts pneumatiques (10) correspondant aux deux autres robinets à plusieurs voies (30) dans le troisième état sont isolés de l'accumulateur de pression (20), et des états des deux ressorts pneumatiques (10) restent inchangés, et les deux autres ressorts pneumatiques (10) sont capables de monter sous l'effet le l'alimentation en air de l'accumulateur de pression (20).

6. Véhicule (1000) selon la revendication 4, dans lequel lorsqu'un angle de braquage du véhicule (1000) est supérieur à un angle prédéfini et une vitesse de véhicule du véhicule (1000) est supérieure à une vitesse prédéfinie, parmi le premier robinet à plusieurs voies (31), le deuxième robinet à plusieurs voies (32), le troisième robinet à plusieurs voies (33), et le quatrième robinet à plusieurs voies (34), deux robinets à plusieurs voies (30) correspondant à une direction du braquage du véhicule (1000) sont dans un deuxième état, les deux autres robinets à voies multiples (30) sont dans le premier état ; la première soupape de passage (81) et la troisième soupape de passage (83) sont dans un état coupé, et la deuxième soupape de passage (82) et la quatrième soupape de passage (84) sont dans un état connecté ; parmi le premier ressort pneumatique (11), le deuxième ressort pneumatique (12), le troisième ressort pneumatique (13), et le quatrième ressort pneumatique (14), deux ressorts pneumatiques (10) correspondant aux deux soupapes à plusieurs voies (30) dans le deuxième état sont isolés de l'accumulateur de pression (20) avec les premiers orifices d'admission d'air (111) et les second orifices d'admission d'air (122) de ceux-ci et sont capables de descendre sous l'effet de l'alimentation en air de l'accumulateur de pression (20), et les deux autres ressorts pneumatiques (10) sont capables de monter sous l'effet de l'alimentation en air de l'accumulateur de pression (20).

7. Véhicule (1000) selon la revendication 4, dans lequel lorsque le véhicule (1000) est dans un état cahoteux, chacun de la pluralité de robinets à plusieurs voies (30) est dans un troisième état ; la deuxième soupape de passage (82) et la quatrième soupape de passage (84) sont dans un état coupé, la première soupape de passage (81) et la troisième soupape de passage (83) sont dans un état connecté ; le premier orifice d'admission d'air (111) du premier ressort pneumatique (11) est raccordé au second orifice d'admission d'air (122) du deuxième ressort pneumatique (12) par le biais de la première conduite de raccordement (71), et le premier orifice d'alimentation en air (111) du troisième ressort pneumatique (13) est raccordé au second orifice d'admission d'air (122) du quatrième ressort pneumatique (14) par le biais de la troisième conduite de raccordement (73).

8. Véhicule (1000) selon la revendication 4, dans lequel lorsqu'un nombre de manoeuvres de braquage du véhicule (1000) au cours d'une période prédéterminée est supérieur à un nombre prédéfini, chacun des robinets à plusieurs voies (30) est dans un troisième état ; la première soupape de passage (81) et la troisième soupape de passage (83) sont dans un état coupé, la deuxième soupape de passage (82) et la quatrième soupape de passage (84) sont dans un état connecté ; le second orifice d'admission d'air (122) du premier ressort pneumatique (11) est raccordé au second orifice d'admission d'air (122) du troisième ressort pneumatique (13) par le biais de la quatrième conduite de raccordement (74), et le second orifice d'admission d'air (122) du deuxième ressort pneumatique (12) est raccordé au premier orifice d'admission d'air (111) du quatrième ressort pneumatique (14) par le biais de la deuxième conduite de raccordement (72).

9. Véhicule (1000) selon la revendication 4, lorsqu'un côté arrière du véhicule (1000) approche un objet cible, parmi le premier robinet à plusieurs voies (31), le deuxième robinet à plusieurs voies (32), le troisième robinet à plusieurs voies (33), et le quatrième robinet à plusieurs voies (34), deux robinets à plusieurs voies (30) proches de l'objet cible sont dans un deuxième état, les deux autres robinets à plusieurs voies (30) sont dans un troisième état ; la première soupape de passage (81), la deuxième soupape de passage (82), la troisième soupape de passage (83), et la quatrième soupape de passage (84) sont toutes dans un état coupé ; parmi le premier ressort pneumatique (11), le deuxième ressort pneumatique (12), le troisième ressort pneumatique (13), et le quatrième ressort pneumatique (14), deux ressorts pneumatiques correspondant aux deux robinets à plusieurs voies (30) dans le deuxième état sont isolés de l'accumulateur de pression (20) avec les premiers orifices d'admission d'air (111) et les seconds orifices d'admission d'air (122) de ceux-ci et sont capables de descendre sous l'effet de l'alimentation en air de l'accumulateur de pression (20), et des états des deux autres ressorts pneumatiques (10) restent inchangés.

10. Véhicule (1000) selon l'une quelconque des revendications 3 à 9, comprenant en outre :
un corps, dans lequel le système de ressort pneumatique (100) est disposé dans le corps.

11. Procédé de commande pour un véhicule (1000) avec un système de ressort pneumatique (100), dans lequel le système de ressort pneumatique (100) comprend :
une pluralité de ressorts pneumatiques (10), dans lequel chacun de la pluralité de ressorts pneumatiques (10) est disposé pour correspondre à une suspension du véhicule (1000) et présente un premier orifice d'admission d'air (111) et un second orifice d'admission d'air (122) ;
un accumulateur de pression (20) disposé sur une conduite d'alimentation en air (21) et configuré pour alimenter chacun de la pluralité de ressorts pneumatiques (10) en pression pneumatique par le biais du premier orifice d'admission d'air (111) et du second orifice d'admission d'air (122) du ressort pneumatique (10) ; et
une pluralité de robinets à plusieurs voies (30) configurés pour raccorder la pluralité de ressorts pneumatiques (10) à la conduite d'alimentation en air (21) et correspondant à la pluralité de ressorts pneumatiques (10) en correspondance biunivoque, et
dans lequel le procédé de commande comprend :
(S10) une commande d'un de la pluralité de robinets à plusieurs voies (30) pour être dans un premier état pour raccorder le premier orifice d'admission d'air (111) d'un de la pluralité de ressorts pneumatiques (10) correspondant au robinet à plusieurs voies (30) à la conduite d'alimentation en air (21) par le biais du robinet à plusieurs voies, et pour raccorder le second orifice d'admission d'air (122) du ressort pneumatique (10) à l'atmosphère par le biais du robinet à plusieurs voies ;
(S20) une commande de l'accumulateur de pression (20) pour fonctionner pour permettre au ressort pneumatique (10) correspondant au robinet à plusieurs voies (30) de monter sous l'effet de l'alimentation en air de l'accumulateur de pression (20) lorsque le robinet à plusieurs voies (30) est dans le premier état ;
(S30) une commande d'un de la pluralité de robinets à plusieurs voies (30) pour être dans un deuxième état pour raccorder le premier orifice d'admission d'air (111) d'un de la pluralité de ressorts pneumatiques (10) correspondant au robinet à plusieurs voies (30) à l'atmosphère par le biais du robinet à plusieurs voies, et pour raccorder le second orifice d'admission d'air (122) du ressort pneumatique (10) à la conduite d'alimentation en air (21) par le biais du robinet à plusieurs voies ; et
(S40) une commande de l'accumulateur de pression (20) pour fonctionner pour permettre au ressort pneumatique (10) correspondant au robinet à plusieurs voies (30) de descendre sous l'effet de l'alimentation en air de l'accumulateur de pression (20) lorsque le robinet à plusieurs voies (30) est dans le deuxième état.

12. Procédé de commande selon la revendication 11, dans lequel la pluralité de ressorts pneumatiques (10) comprend un premier ressort pneumatique (11) configuré pour être disposé sur une roue avant gauche du véhicule (1000), un deuxième ressort pneumatique (12) configuré pour être disposé sur une roue arrière gauche du véhicule (1000), un troisième ressort pneumatique (13) configuré pour être disposé sur une roue avant droite du véhicule (1000), et un quatrième ressort pneumatique (14) configuré pour être disposé sur une roue arrière droite du véhicule (1000) ;
dans lequel la pluralité de robinets à plusieurs voies (30) comprend un premier robinet à plusieurs voies (31) configuré pour raccorder le premier ressort pneumatique (11) à la conduite d'alimentation en air (21), un deuxième robinet à plusieurs voies (32) configuré pour raccorder le deuxième ressort pneumatique (12) à la conduite d'alimentation en air (21), un troisième robinet à plusieurs voies (33) configuré pour raccorder le troisième ressort pneumatique (13) à la conduite d'alimentation en air (21), et un quatrième robinet à plusieurs voies (34) configuré pour raccorder le quatrième ressort pneumatique (14) à la conduite d'alimentation en air (21) ;
dans lequel le système de ressort pneumatique (100) comprend en outre une première conduite de raccordement (71), une deuxième conduite de raccordement (72), une troisième conduite de raccordement (73), une quatrième conduite de raccordement (74), une première soupape de passage (81) disposée sur la première conduite de raccordement (71), une deuxième soupape de passage (82) disposée sur la deuxième conduite de raccordement (72), une troisième soupape de passage (83) disposée sur la troisième conduite de raccordement (73), et une quatrième soupape de passage (84) disposée sur la quatrième conduite de raccordement (74) ;
dans lequel une extrémité de la première conduite de raccordement (71) est raccordée au premier orifice d'admission d'air (111) du premier ressort pneumatique (11), et l'autre extrémité de la première conduite de raccordement (71) est raccordée au second orifice d'admission d'air (122) du deuxième ressort pneumatique (12) ; une extrémité de la deuxième conduite de raccordement (72) est raccordée au second orifice d'admission d'air (122) du deuxième ressort pneumatique (12), et l'autre extrémité de la deuxième conduite de raccordement (72) est raccordée au premier orifice d'admission d'air (111) du quatrième ressort pneumatique (14) ; une extrémité de la troisième conduite de raccordement (73) est raccordée au premier orifice d'admission d'air (111) du troisième ressort pneumatique (13), et l'autre extrémité de la troisième conduite de raccordement (73) est raccordée au second orifice d'admission d'air (122) du quatrième ressort pneumatique (14) ; et une extrémité de la quatrième conduite de raccordement (74) est raccordée au premier orifice d'admission d'air (111) du troisième ressort pneumatique (13), et l'autre extrémité de la quatrième conduite de raccordement (74) est raccordée au second orifice d'admission d'air (122) du premier ressort pneumatique (11) ;
dans lequel le procédé de commande comprend :
(S50) lorsqu'un côté avant, un côté gauche ou un côté droit du véhicule (1000) approche un objet cible, parmi le premier robinet à plusieurs voies (31), le deuxième robinet à plusieurs voies (32), le troisième robinet à plusieurs voies (33), et le quatrième robinet à plusieurs voies (34), une commande de deux robinets à plusieurs voies (30) proche de l'objet cible pour être dans le premier état, et une commande des deux autres robinets à plusieurs voies (30) pour être dans un troisième état ; dans lequel parmi le premier ressort pneumatique (11), le deuxième ressort pneumatique (12), le troisième ressort pneumatique (30), et le quatrième ressort pneumatique (20), les premiers orifices d'admission d'air (111) et les seconds orifices d'admission d'air (122) de deux ressorts pneumatiques correspondant aux deux autres robinets à plusieurs voies (30) dans le troisième état sont isolés de l'accumulateur de pression (20) ;
(S60) une commande de la première soupape de passage (81), de la deuxième soupape de passage (82), de la troisième soupape de passage (83), et de la quatrième soupape de passage (84) pour être dans un état coupé ; et
(S70) une commande de l'accumulateur de pression (20) pour fonctionner pour permettre aux deux autres ressorts pneumatiques (10) proches de l'objet cible de monter sous l'effet de l'alimentation en air de l'accumulateur de pression (20), et pour permettre à des états des deux ressorts pneumatiques (10) correspondant aux deux autres robinets à plusieurs voies (30) dans le troisième état de rester inchangés.

13. Procédé de commande selon la revendication 11, dans lequel la pluralité de ressorts pneumatiques (10) comprend un premier ressort pneumatique (11) configuré pour être disposé sur une roue avant gauche du véhicule (1000), un deuxième ressort pneumatique (12) configuré pour être disposé sur une roue arrière gauche du véhicule (1000), un troisième ressort pneumatique (13) configuré pour être disposé sur une roue avant droite du véhicule (1000), et un quatrième ressort pneumatique (14) configuré pour être disposé sur une roue arrière droite du véhicule (1000) ;
dans lequel la pluralité de robinets à plusieurs voies (30) comprend un premier robinet à plusieurs voies (31) configuré pour raccorder le premier ressort pneumatique (11) à la conduite d'alimentation en air (21), un deuxième robinet à plusieurs voies (32) configuré pour raccorder le deuxième ressort pneumatique (12) à la conduite d'alimentation en air (21), un troisième robinet à plusieurs voies (33) configuré pour raccorder le troisième ressort pneumatique (13) à la conduite d'alimentation en air (21), et un quatrième robinet à plusieurs voies (34) configuré pour raccorder le quatrième ressort pneumatique (14) à la conduite d'alimentation en air (21) ;
dans lequel le système de ressort pneumatique (100) comprend en outre une première conduite de raccordement (71), une deuxième conduite de raccordement (72), une troisième conduite de raccordement (73), une quatrième conduite de raccordement (74), une première soupape de passage (81) disposée sur la première conduite de raccordement (71), une deuxième soupape de passage (82) disposée sur la deuxième conduite de raccordement (72), une troisième soupape de passage (83) disposée sur la troisième conduite de raccordement (73), et une quatrième soupape de passage (84) disposée sur la quatrième conduite de raccordement (74) ;
dans lequel une extrémité de la première conduite de raccordement (71) est raccordée au premier orifice d'admission d'air (111) du premier ressort pneumatique (11), et l'autre extrémité de la première conduite de raccordement (71) est raccordée au second orifice d'admission d'air (122) du deuxième ressort pneumatique (12) ; une extrémité de la deuxième conduite de raccordement (72) est raccordée au second orifice d'admission d'air (122) du deuxième ressort pneumatique (12), et l'autre extrémité de la deuxième conduite de raccordement (72) est raccordée au premier orifice d'admission d'air (111) du quatrième ressort pneumatique (14) ; une extrémité de la troisième conduite de raccordement (73) est raccordée au premier orifice d'admission d'air (111) du troisième ressort pneumatique (13), et l'autre extrémité de la troisième conduite de raccordement (73) est raccordée au second orifice d'admission d'air (122) du quatrième ressort pneumatique (14) ; et une extrémité de la quatrième conduite de raccordement (74) est raccordée au premier orifice d'admission d'air (111) du troisième ressort pneumatique (13), et l'autre extrémité de la quatrième conduite de raccordement (74) est raccordée au second orifice d'admission d'air (122) du premier ressort pneumatique (11) ;
dans lequel le procédé de commande comprend :
(S80) lorsqu'un angle de braquage du véhicule (1000) est supérieur à un angle prédéfini et une vitesse de véhicule du véhicule (1000) est supérieure à une vitesse prédéfinie, parmi le premier robinet à plusieurs voies (31), le deuxième robinet à plusieurs voies (32), le troisième robinet à plusieurs voies (33), et le quatrième robinet à plusieurs voies (34), une commande de deux robinets à plusieurs voies (30) correspondant à une direction du braquage du véhicule (1000) pour être dans un deuxième état, et une commande des deux autres robinets à voies multiples (30) pour être dans le premier état, dans lequel les premiers orifices d'admission d'air (111) et les second orifices d'admission d'air (122) de deux ressorts pneumatiques (10) correspondant aux deux robinets à plusieurs voies (30) dans le deuxième état sont isolés de l'accumulateur de pression (20) ;
(S90) une commande de la première soupape de passage (81) et de la troisième soupape de passage (83) pour être dans un état coupé, et une commande de la deuxième soupape de passage (82) et de la quatrième soupape de passage (84) pour être dans un état connecté ; et
(S100) une commande de l'accumulateur de pression (20) pour fonctionner pour permettre aux deux ressorts pneumatiques (10) correspondant aux deux soupapes à plusieurs voies (30) dans le deuxième état de descendre sous l'effet de l'alimentation en air de l'accumulateur de pression (20), et pour permettre aux deux autres ressorts pneumatiques (10) de monter sous l'effet de l'alimentation en air de l'accumulateur de pression (20).

14. Procédé de commande selon la revendication 11, dans lequel la pluralité de ressorts pneumatiques (10) inclut un premier ressort pneumatique (11) configuré pour être disposé sur une roue avant gauche du véhicule (1000), un deuxième ressort pneumatique (12) configuré pour être disposé sur une roue arrière gauche du véhicule (1000), un troisième ressort pneumatique (13) configuré pour être disposé sur une roue avant droite du véhicule (1000), et un quatrième ressort pneumatique (14) configuré pour être disposé sur une roue arrière droite du véhicule (1000) ;
dans lequel la pluralité de robinets à plusieurs voies (30) comprend un premier robinet à plusieurs voies (31) configuré pour raccorder le premier ressort pneumatique (11) à la conduite d'alimentation en air (21), un deuxième robinet à plusieurs voies (32) configuré pour raccorder le deuxième ressort pneumatique (12) à la conduite d'alimentation en air (21), un troisième robinet à plusieurs voies (33) configuré pour raccorder le troisième ressort pneumatique (13) à la conduite d'alimentation en air (21), et un quatrième robinet à plusieurs voies (34) configuré pour raccorder le quatrième ressort pneumatique (14) à la conduite d'alimentation en air (21) ;
dans lequel le système de ressort pneumatique (100) comprend en outre une première conduite de raccordement (71), une deuxième conduite de raccordement (72), une troisième conduite de raccordement (73), une quatrième conduite de raccordement (74), une première soupape de passage (81) disposée sur la première conduite de raccordement (71), une deuxième soupape de passage (82) disposée sur la deuxième conduite de raccordement (72), une troisième soupape de passage (83) disposée sur la troisième conduite de raccordement (73), et une quatrième soupape de passage (84) disposée sur la quatrième conduite de raccordement (74) ;
dans lequel une extrémité de la première conduite de raccordement (71) est raccordée au premier orifice d'admission d'air (111) du premier ressort pneumatique (11), et l'autre extrémité de la première conduite de raccordement (71) est raccordée au second orifice d'admission d'air (122) du deuxième ressort pneumatique (12) ; une extrémité de la deuxième conduite de raccordement (72) est raccordée au second orifice d'admission d'air (122) du deuxième ressort pneumatique (12), et l'autre extrémité de la deuxième conduite de raccordement (72) est raccordée au premier orifice d'admission d'air (111) du quatrième ressort pneumatique (14) ; une extrémité de la troisième conduite de raccordement (73) est raccordée au premier orifice d'admission d'air (111) du troisième ressort pneumatique (13), et l'autre extrémité de la troisième conduite de raccordement (73) est raccordée au second orifice d'admission d'air (122) du quatrième ressort pneumatique (14) ; et une extrémité de la quatrième conduite de raccordement (74) est raccordée au premier orifice d'admission d'air (111) du troisième ressort pneumatique (13), et l'autre extrémité de la quatrième conduite de raccordement (74) est raccordée au second orifice d'admission d'air (122) du premier ressort pneumatique (11) ;
dans lequel le procédé de commande comprend :
(S110) lorsque le véhicule (1000) est dans un état cahoteux, une commande de chacun de la pluralité de robinets à plusieurs voies (30) pour être dans un troisième état ; et
(S120) une commande de la deuxième soupape de passage (82) et de la quatrième soupape de passage (84) afin qu'elles soient dans un état coupé, et une commande de la première soupape de passage (81) et de la troisième soupape de passage (83) afin qu'elles soient dans un état connecté, dans lequel le premier orifice d'admission d'air (111) du premier ressort pneumatique (11) est raccordé au second orifice d'admission d'air (122) du deuxième ressort pneumatique (12) par le biais de la première conduite de raccordement (71), et le premier orifice d'alimentation en air (111) du troisième ressort pneumatique (13) est raccordé au second orifice d'admission d'air (122) du quatrième ressort pneumatique (14) par le biais de la troisième conduite de raccordement (73).

15. Procédé de commande selon la revendication 11, dans lequel la pluralité de ressorts pneumatiques (10) comprend un premier ressort pneumatique (11) configuré pour être disposé sur une roue avant gauche du véhicule (1000), un deuxième ressort pneumatique (12) configuré pour être disposé sur une roue arrière gauche du véhicule (1000), un troisième ressort pneumatique (13) configuré pour être disposé sur une roue avant droite du véhicule (1000), et un quatrième ressort pneumatique (14) configuré pour être disposé sur une roue arrière droite du véhicule (1000) ;
dans lequel la pluralité de robinets à plusieurs voies (30) comprend un premier robinet à plusieurs voies (31) configuré pour raccorder le premier ressort pneumatique (11) à la conduite d'alimentation en air (21), un deuxième robinet à plusieurs voies (32) configuré pour raccorder le deuxième ressort pneumatique (12) à la conduite d'alimentation en air (21), un troisième robinet à plusieurs voies (33) configuré pour raccorder le troisième ressort pneumatique (13) à la conduite d'alimentation en air (21), et un quatrième robinet à plusieurs voies (34) configuré pour raccorder le quatrième ressort pneumatique (14) à la conduite d'alimentation en air (21) ;
dans lequel le système de ressort pneumatique (100) comprend en outre une première conduite de raccordement (71), une deuxième conduite de raccordement (72), une troisième conduite de raccordement (73), une quatrième conduite de raccordement (74), une première soupape de passage (81) disposée sur la première conduite de raccordement (71), une deuxième soupape de passage (82) disposée sur la deuxième conduite de raccordement (72), une troisième soupape de passage (83) disposée sur la troisième conduite de raccordement (73), et une quatrième soupape de passage (84) disposée sur la quatrième conduite de raccordement (74) ;
dans lequel une extrémité de la première conduite de raccordement (71) est raccordée au premier orifice d'admission d'air (111) du premier ressort pneumatique (11), et l'autre extrémité de la première conduite de raccordement (71) est raccordée au second orifice d'admission d'air (122) du deuxième ressort pneumatique (12) ; une extrémité de la deuxième conduite de raccordement (72) est raccordée au second orifice d'admission d'air (122) du deuxième ressort pneumatique (12), et l'autre extrémité de la deuxième conduite de raccordement (72) est raccordée au premier orifice d'admission d'air (111) du quatrième ressort pneumatique (14) ; une extrémité de la troisième conduite de raccordement (73) est raccordée au premier orifice d'admission d'air (111) du troisième ressort pneumatique (13), et l'autre extrémité de la troisième conduite de raccordement (73) est raccordée au second orifice d'admission d'air (122) du quatrième ressort pneumatique (14) ; et une extrémité de la quatrième conduite de raccordement (74) est raccordée au premier orifice d'admission d'air (111) du troisième ressort pneumatique (13), et l'autre extrémité de la quatrième conduite de raccordement (74) est raccordée au second orifice d'admission d'air (122) du premier ressort pneumatique (11) ;
dans lequel le procédé de commande comprend :
(S130) lorsqu'un nombre de manoeuvres de braquage du véhicule (1000) au cours d'une période prédéterminée est supérieur à un nombre prédéfini, une commande de l'ensemble de la pluralité de robinets à plusieurs voies (30) afin qu'ils soient dans un troisième état ; et
(S140) une commande de la première soupape de passage (81) et de la troisième soupape de passage (83) pour être dans un état coupé, et une commande de la deuxième soupape de passage (82) et de la quatrième soupape de passage (84) pour être dans un état connecté, dans lequel le second orifice d'admission d'air (122) du premier ressort pneumatique (11) est raccordé au second orifice d'admission d'air (122) du troisième ressort pneumatique (13) par le biais de la quatrième conduite de raccordement (74), et le second orifice d'admission d'air (122) du deuxième ressort pneumatique (12) est raccordé au premier orifice d'admission d'air (111) du quatrième ressort pneumatique (14) par le biais de la deuxième conduite de raccordement (72).
